# FASCICULE DE BREVET EUROPEEN

(11) **EP 1 326 914 B1**
(45) Date de publication et mention de la délivrance du brevet: **21.06.2006**
(21) Numéro de dépôt: 01986704.3
(22) Date de dépôt: 09.10.2001
(51) Int. Cl.: C08K 5/548, C08L 21/00

(54) **COMPOSITION DE CAOUTCHOUC COMPORTANT A TITRE D'AGENT DE COUPLAGE UN ORGANOSILANE POLYFONCTIONNEL**
KAUTSCHUKZUSAMMENSETZUNG MIT EINEM POLYFUNKTIONELLEN ORGANOSILAN ALS HAFTVERMITTLER
RUBBER COMPOSITION COMPRISING AS COUPLING AGENT A POLYFUNCTIONAL ORGANOSILANE

(30) Priorité: 13.10.2000 FR 0013255
(43) Date de publication de la demande: 16.07.2003
(73) Titulaire: Société de Technologie Michelin, 63000 Clermont-Ferrand Cedex 09 (FR); MICHELIN RECHERCHE ET TECHNIQUE S.A., CH-1763 Granges-Paccot (CH)
(72) Inventeur: TARDIVAT, Jean-Claude, F-63000 Clermont-Ferrand (FR); PAGANO, Salvatore, F-63400 Chamalières (FR)
(74) Mandataire: Ribière, Joel
(86) Numéro de dépôt international: PCT/EP2001/011669
(87) Numéro de publication internationale: WO 2002/031041

(56) Documents cités:
- EP-A- 0 680 997
- EP-A- 0 791 622
- WO-A-00/53671
- DE-A- 19 915 281

## Description

La présente invention se rapporte aux compositions d'élastomères diéniques renforcées d'une charge inorganique, utilisables pour la fabrication de pneumatiques ou de produits semi-finis pour pneumatiques, notamment de bandes de roulement de ces pneumatiques.

Elle est relative en particulier aux agents de couplage utilisables pour le couplage de charges inorganiques renforçantes et d'élastomères diéniques dans de telles compositions élastomériques.

On sait que d'une manière générale, pour obtenir les propriétés de renforcement optimales conférées par une charge, il convient que cette dernière soit présente dans la matrice élastomérique sous une forme finale qui soit à la fois la plus finement divisée possible et répartie de la façon la plus homogène possible. Or, de telles conditions ne peuvent être réalisées que dans la mesure où la charge présente une très bonne aptitude, d'une part à s'incorporer dans la matrice lors du mélange avec l'élastomère et à se désagglomérer, d'autre part à se disperser de façon homogène dans cette matrice.

De manière tout à fait connue, le noir de carbone présente de telles aptitudes, ce qui n'est en général pas le cas des charges inorganiques. En effet, pour des raisons d'affinités réciproques, les particules de charge inorganique ont une fâcheuse tendance, dans la matrice élastomérique, à s'agglomérer entre elles. Ces interactions ont pour conséquence néfaste de limiter la dispersion de la charge et donc les propriétés de renforcement à un niveau sensiblement inférieur à celui qu'il serait théoriquement possible d'atteindre si toutes les liaisons (charge inorganique/élastomère) susceptibles d'être créées pendant l'opération de mélangeage, étaient effectivement obtenues ; ces interactions tendent d'autre part à augmenter la consistance à l'état cru des compositions caoutchouteuses et donc à rendre leur mise en oeuvre ("processabilité") plus difficile qu'en présence de noir de carbone.

Depuis que les économies de carburant et la nécessité de protéger l'environnement sont devenues une priorité, il s'est avéré cependant nécessaire de produire des pneumatiques ayant une résistance au roulement réduite, sans pénalisation de leur résistance à l'usure. Ceci a été rendu possible notamment grâce à la découverte de nouvelles compositions de caoutchouc renforcées de charges inorganiques spécifiques qualifiées de "renforçantes", capables de rivaliser du point de vue renforçant avec un noir de carbone conventionnel de grade pneumatique, tout en offrant à ces compositions une hystérèse plus faible, synonyme d'une plus basse résistance au roulement pour les pneumatiques les comportant.

De telles compositions de caoutchouc, comportant des charges inorganiques renforçantes du type siliceuses ou alumineuses, ont par exemple été décrites dans les brevets ou demandes de brevet EP-A-0501227 (ou US-A-5227425), EP-A-0735088 (ou US-A-5852099), EP-A-On citera en particulier les documents EP-A-0501227, EP-A-0735088 ou EP-A-0881252 qui divulguent des compositions de caoutchouc diénique renforcées de silices précipitées à haute dispersibilité, de telles compositions permettant de fabriquer des bandes de roulement ayant une résistance au roulement nettement améliorée, sans affecter les autres propriétés en particulier celles d'adhérence, d'endurance et de résistance à l'usure. De telles compositions présentant un tel compromis de propriétés contradictoires sont également décrites dans les demandes EP-A-0810258 et WO99/28376, avec à titre de charges inorganiques renforçantes des charges alumineuses (alumines ou (oxyde)hydroxydes d'aluminium) spécifiques à dispersibilité élevée, ou encore dans les demandes WO00/73372 et WO00/73373 décrivant des oxydes de titane spécifiques du type renforçants.

L'utilisation de ces charges inorganiques spécifiques, hautement dispersibles, à titre de charge renforçante majoritaire ou non, a certes réduit les difficultés de mise en oeuvre des compositions de caoutchouc les contenant, mais cette mise en oeuvre reste néanmoins plus difficile que pour les compositions de caoutchouc chargées conventionnellement de noir de carbone.

En particulier, il est nécessaire d'utiliser un agent de couplage, encore appelé agent de liaison, qui a pour fonction d'assurer la liaison entre la surface des particules de charge inorganique et l'élastomère, tout en facilitant la dispersion de cette charge inorganique au sein de la matrice élastomérique.

On rappelle ici que par "agent de couplage" (charge inorganique/élastomère), on doit entendre, de manière connue, un agent apte à établir une liaison suffisante, de nature chimique et/ou physique, entre la charge inorganique et l'élastomère diénique ; un tel agent de couplage, au moins bifonctionnel, a par exemple comme formule générale simplifiée "Y-W-X", dans laquelle:
- Y représente un groupe fonctionnel (fonction "Y") qui est capable de se lier physiquement et/ou chimiquement à la charge inorganique, une telle liaison pouvant être établie, par exemple, entre un atome de silicium de l'agent de couplage et les groupes hydroxyle (OH) de surface de la charge inorganique (par exemple les silanols de surface lorsqu'il s'agit de silice);
- X représente un groupe fonctionnel (fonction "X") capable de se lier physiquement et/ou chimiquement à l'élastomère diénique, par exemple par l'intermédiaire d'un atome de soufre;
- W représente un groupe divalent permettant de relier Y et X.

Les agents de couplage ne doivent en particulier pas être confondus avec de simples agents de recouvrement de charge inorganique qui, de manière connue, peuvent comporter la fonction Y active vis-à-vis de la charge inorganique mais sont dépourvus de la fonction X active vis-à-vis de l'élastomère diénique.

Des agents de couplage, notamment (silice/élastomère diénique), ont été décrits dans un grand nombre de documents, les plus connus étant des organosilanes bifonctionnels porteurs d'au moins une fonction alkoxyle à titre de fonction Y, et, à titre de fonction X, d'au moins une fonction capable de réagir avec l'élastomère diénique telle que par exemple une fonction soufrée (i.e., comportant du soufre).

Ainsi, il a été proposé dans les demandes de brevet FR-A-2094859 ou GB-A-1310379 d'utiliser un agent de couplage mercaptoalkoxysilane pour la fabrication de bandes de roulement de pneumatiques. Il fut rapidement mis en évidence et il est aujourd'hui bien connu que les mercaptoalkoxysilanes sont susceptibles de procurer d'excellentes propriétés de couplage silice/élastomère, mais que l'utilisation industrielle de ces agents de couplage n'est pas possible en raison de la très forte réactivité des fonctions soufrées type thiols -SH (fonctions X) conduisant très rapidement au cours de la préparation des compositions de caoutchouc, dans un mélangeur interne, à des vulcanisations prématurées encore appelées "grillage" (*"scorching''*), à des viscosités à l'état cru très élevées, en fin de compte à des compositions de caoutchouc quasiment impossibles à travailler et à mettre en oeuvre industriellement. Pour illustrer ce problème, on peut citer par exemple les documents FR-A-2206330, US-A-3873489, US-A-4002594.

Pour remédier à cet inconvénient, il a été proposé de remplacer ces mercaptoalkoxysilanes par des alkoxysilanes polysulfurés, notamment des polysulfures de bis-(alkoxylsilylpropyle) tels que décrits dans de très nombreux documents (voir par exemple FR-A-2149339, FR-A-2206330, US-A-3842111, US-A-3873489, US-A-3997581, EP-A-680997 ou US-A-5650457, EP-A-791622 ou US-A-5733963, DE-A-19951281 ou EP-A-1043357, WO00/53671). Parmi ces polysulfures, doivent être cités notamment le tétrasulfure de bis 3-triéthoxysilylpropyle (en abrégé TESPT) et le disulfure de bis 3-triéthoxysilylpropyle (en abrégé TESPD).

Ces alkoxysilanes polysulfurés, en particulier le TESPT, sont généralement considérés comme les produits apportant, pour des vulcanisats comportant une charge inorganique renforçante, en particulier de la silice, le meilleur compromis en termes de sécurité au grillage, de facilité de mise en oeuvre et de pouvoir renforçant. Ils sont à ce titre les agents de couplage les plus utilisés aujourd'hui dans les compositions de caoutchouc pour pneumatiques, même s'ils sont relativement onéreux et, qui plus est, doivent être utilisés le plus souvent dans une quantité relativement importante.

Ces polysulfures d'alkoxysilanes présentent toutefois l'inconvénient de ralentir de manière sensible la cinétique de vulcanisation des compositions de caoutchouc les contenant, par rapport à celle des compositions conventionnelles renforcées par du noir de carbone. Les durées de cuisson plus longues qui en résultent peuvent pénaliser la mise en oeuvre industrielle de ces compositions de caoutchouc renforcées de charges inorganiques, comme celle des articles en caoutchouc les contenant.

Or, les Demanderesses ont découvert lors de leurs recherches que certains organosilanes spécifiques permettent, de manière inattendue, de pallier cet inconvénient relatif à la cinétique de cuisson, sans pénaliser par ailleurs les propriétés de couplage et donc de renforcement, offrant ainsi aux compositions élastomériques un compromis de propriétés amélioré par rapport à celui atteint jusqu'ici avec des alkoxysilanes polysulfurés, en particulier avec le TESPT.

Ces organosilanes spécifiques ne posent par ailleurs pas les problèmes précités de grillage prématuré et ceux de mise en oeuvre dus à une viscosité trop importante des compositions de caoutchouc à l'état cru, inconvénients propres aux mercaptoalkoxysilanes.

En conséquence, un premier objet de l'invention concerne une composition élastomérique à base d'au moins un élastomère diénique, une charge inorganique à titre de charge renforçante, un organosilane polyfonctionnel à titre d'agent de couplage (charge inorganique/élastomère diénique), porteur d'au moins deux fonctions notées "X" et "Y", greffable d'une part sur l'élastomère au moyen de la fonction X et d'autre part sur la charge inorganique au moyen de la fonction Y, cette composition étant caractérisée en ce que ladite fonction Y est une fonction hydroxysilyle (≡Si-OH). En d'autres termes, cet organosilane polyfonctionnel entre dans la catégorie des hydroxysilanes.

A la connaissance des Demanderesses, des organosilanes répondant à cette définition n'avaient jusqu'ici jamais été utilisés comme agents de couplage dans des compositions de caoutchouc renforcées d'une charge inorganique, voire même synthétisés, en raison de forts préjugés relatifs à l'instabilité reconnue des organosilanes porteurs de fonctions hydroxyles. On rappelle ici que cette instabilité est due à une propension forte des groupes hydroxysilyles (=Si-OH), en particulier en présence d'acides forts (générés par ailleurs lors de la synthèse d'organoxysilanes à partir de silanes halogénés), à se condenser sur eux-mêmes pour former des liaisons ≡Si-O-Si≡, en d'autres termes des liaisons siloxanes ; ce mécanisme est d'ailleurs mis à profit pour la synthèse des polysiloxanes (voir par exemple les ouvrages suivants: *"The Chemistry of organic silicon compounds",* S. Patai et Z. Rappoport, John Wiley & Sons, 1989, Part 1, 722-725 ; *"Siloxane polymers",* S.J. Clarson et J.A. Semlyen, Ellis Horwood Pretice-Hall, Elgelwood Cliffs N. J., 1993, 577-578 ; 597).

L'invention a également pour objet l'utilisation d'une composition élastomérique conforme à l'invention pour la fabrication de pneumatiques ou pour la fabrication de produits semi-finis destinés à de tels pneumatiques, ces produits semi-finis étant choisis en particulier dans le groupe constitué par les bandes de roulement, les sous-couches destinées par exemple à être placées sous ces bandes de roulement, les nappes sommet, les flancs, les nappes carcasse, les talons, les protecteurs, les chambres à air et les gommes intérieures étanches pour pneumatique sans chambre.

L'invention a également pour objet ces pneumatiques et ces produits semi-finis eux-mêmes, lorsqu'ils comportent une composition élastomérique conforme à l'invention, ces pneumatiques pouvant être notamment destinés à des véhicules tourisme comme à des véhicules industriels choisis parmi camionnettes, "Poids-lourd" - i.e., métro, bus, engins de transport routier (camions, tracteurs, remorques), véhicules hors-la-route - , engins agricoles ou de génie civil, avions, autres véhicules de transport ou de manutention.

L'invention concerne en particulier les bandes de roulement de tels pneumatiques, ces bandes de roulement pouvant être utilisées lors de la fabrication de pneumatiques neufs ou pour le rechapage de pneumatiques usagés ; grâce aux compositions de l'invention, ces bandes de roulement présentent à la fois une faible résistance au roulement, une très bonne adhérence, une résistance élevée à l'usure, ainsi qu'une cinétique de vulcanisation améliorée.

Les compositions de caoutchouc selon l'invention, à cinétique de vulcanisation améliorée, sont susceptibles d'être préparées par un procédé caractérisé en ce qu'on incorpore à au moins un élastomère diénique, au moins une charge inorganique à titre de charge renforçante et un organosilane polyfonctionnel à titre d'agent de couplage (charge inorganique/élastomère diénique), porteur d'au moins deux fonctions notées "X" et "Y", greffable d'une part sur l'élastomère au moyen de la fonction X et d'autre part sur la charge inorganique au moyen de la fonction Y, ladite fonction Y étant une fonction hydroxysilyle (=Si-OH), et en ce qu'on malaxe thermomécaniquement le tout, en une ou plusieurs étapes, jusqu'à atteindre une température maximale comprise entre 110°C et 190°C.

L'invention a également pour objet l'utilisation à titre d'agent de couplage (charge inorganique/élastomère diénique), dans une composition à base d'élastomère diénique renforcée par une charge inorganique, d'un hydroxysilane polyfonctionnel tel que défini ci-dessus.

L'invention a aussi pour objet un procédé pour coupler une charge inorganique et un élastomère diénique, dans une composition élastomérique, ce procédé étant caractérisé en ce qu'on incorpore à au moins un élastomère diénique, au moins une charge inorganique à titre de charge renforçante et un organosilane polyfonctionnel, porteur d'au moins deux fonctions notées "X" et "Y", greffable d'une part sur l'élastomère au moyen de la fonction X et d'autre part sur la charge inorganique au moyen de la fonction Y, ladite fonction Y étant une fonction hydroxysilyle (≡Si-OH), et en ce qu'on malaxe thermomécaniquement le tout, en une ou plusieurs étapes, jusqu'à atteindre une température maximale comprise entre 110°C et 190°C.

L'invention ainsi que ses avantages seront aisément compris à la lumière de la description et des exemples de réalisation qui suivent, ainsi que des figures relatives à ces exemples qui représentent :
- fig. 1 : des rhéogrammes (courbes de cuisson) enregistrés pour des compositions de caoutchouc conformes ou non à l'invention;
- fig. 2 : des courbes de variation de module en fonction de l'allongement pour ces compositions de caoutchouc.

### I. MESURES ET TESTS UTILISES

Les compositions de caoutchouc sont caractérisées avant et après cuisson, comme indiqué ci-après.

### I-1. Plasticité Mooney

On utilise un consistomètre oscillant tel que décrit dans la norme française NF T 43-005 (1991). La mesure de plasticité Mooney se fait selon le principe suivant : la composition à l'état cru (i.e., avant cuisson) est moulée dans une enceinte cylindrique chauffée à 100°C. Après une minute de préchauffage, le rotor tourne au sein de l'éprouvette à 2 tours/minute et on mesure le couple utile pour entretenir ce mouvement après 4 minutes de rotation. La plasticité Mooney (ML 1+4) est exprimée en "unité Mooney" (UM, avec 1 UM = 0.83 N.m).

### 1-2. Temps de grillage

Les mesures sont effectuées à 130°C, conformément à la norme française NF T 43-005 (1991). L'évolution de l'indice consistométrique en fonction du temps permet de déterminer le temps de grillage des compositions de caoutchouc, apprécié conformément à la norme précitée par le paramètre T5 (cas d'un grand rotor), exprimé en minutes, et défini comme étant le temps nécessaire pour obtenir une augmentation de l'indice consistométrique (exprimée en UM) de 5 unités au dessus de la valeur minimale mesurée pour cet indice.

### I-3. Essais de traction

Ces essais permettent de déterminer les contraintes d'élasticité et les propriétés à la rupture. Sauf indication différente, ils sont effectués conformément à la norme française NF T 46-002 de septembre 1988. On mesure en seconde élongation (i.e. après un cycle d'accommodation au taux d'extension prévu pour la mesure elle-même) les modules sécants nominaux (ou contraintes apparentes, en MPa) à 10% d'allongement (noté M10), 100% d'allongement (noté M100) et 300% d'allongement (noté M300). On mesure également les contraintes à la rupture (en MPa) et les allongements à la rupture (en %). Toutes ces mesures de traction sont effectuées dans les conditions normales de température et d'hygrométrie selon la norme française NF T 40-101 (décembre 1979).

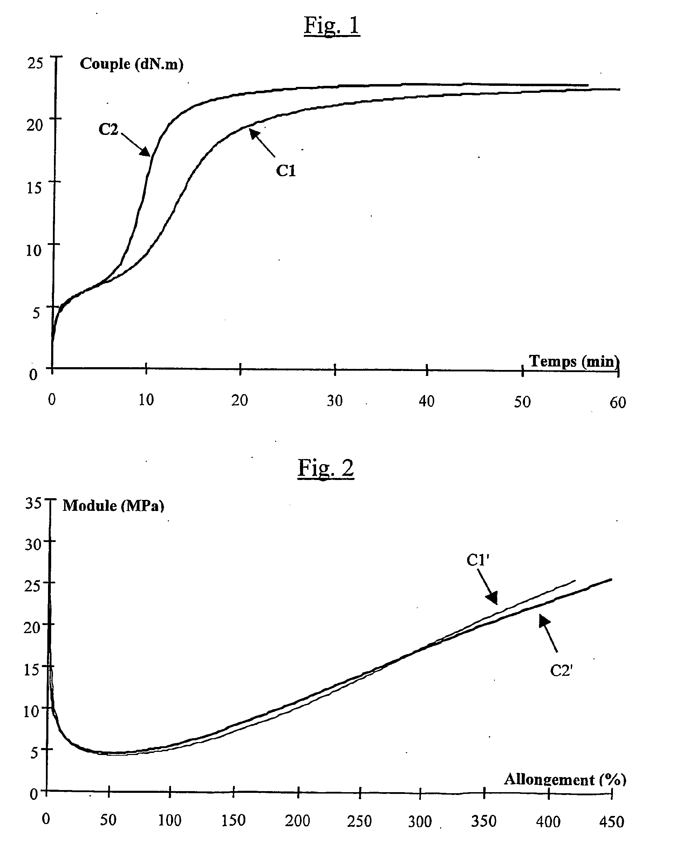

Un traitement des enregistrements de traction permet également de tracer la courbe de module en fonction de l'allongement (voir figure 2 annexée), le module utilisé ici étant le module sécant vrai mesuré en première élongation, calculé en se ramenant à la section réelle de l'éprouvette et non à la section initiale comme précédemment pour les modules nominaux.

### 1-4. Propriétés dynamiques

Les propriétés dynamiques sont mesurées sur un viscoanalyseur (Metravib VA4000), selon la norme ASTM D 5992 - 96. On enregistre la réponse d'un échantillon de composition vulcanisée (éprouvette cylindrique de 4 mm d'épaisseur et de 400 mm² de section), soumis à une sollicitation sinusoïdale en cisaillement simple alterné, à la fréquence de 10Hz, dans les conditions normales de température (23°C) selon la norme ASTM D 1349 - 99. On effectue un balayage en amplitude de déformation de 0,1 à 50% (cycle aller), puis de 50% à 1% (cycle retour) ; pour le cycle retour, on enregistre la valeur maximale observée du facteur de perte tan(δ), notée tan(δ)ₘₐₓ.

### 1-5. Rhéométrie

Les mesures sont effectuées à.150°C avec un rhéomètre à chambre oscillante, selon la norme DIN 53529 - partie 3 (juin 1983). L'évolution du couple rhéométrique en fonction du temps décrit l'évolution de la rigidification de la composition par suite de la réaction de vulcanisation (voir figure 1 annexée). Les mesures sont traitées selon la norme DIN 53529 - partie 2 (mars 1983) : les couples minimum et maximum, mesurés en déciNewton.mètre (dN.m), sont respectivement nommés Cₘᵢₙ et Cₘₐₓ , tᵢ est le délai d'induction, c'est-à-dire le temps nécessaire au début de la réaction de vulcanisation ; t_{α} (par exemple t₉₉) est le temps nécessaire pour atteindre une conversion de α%, c'est-à-dire α% (par exemple 99%) de l'écart entre les couples minimum et maximum. On mesure également l'écart, noté ΔCouple (en dN.m), entre les couples minimum et maximum ainsi que la constante de vitesse de conversion K (en min⁻¹) qui permet d'apprécier la cinétique de vulcanisation.

### II. CONDITIONS DE REALISATION DE L'INVENTION

Les compositions de caoutchouc selon l'invention sont à base d'au moins chacun des constituants suivants :
(i) un (au moins un) élastomère diénique ;
(ii) une (au moins une) charge inorganique à titre de charge renforçante ;
(iii) un (au moins un) organosilane polyfonctionnel à titre d'agent de couplage (charge inorganique/élastomère diénique), porteur d'au moins deux fonctions ("X" et "Y"), greffable d'une part sur l'élastomère au moyen de la fonction X, d'autre part sur la charge inorganique au moyen d'une fonction ("Y") hydroxysilyle (≡Si-OH).

Bien entendu, par l'expression composition "à base de", il faut entendre une composition comportant le mélange et/ou le produit de réaction *in situ* des différents constituants utilisés, certains de ces constituants de base étant susceptibles de, ou destinés à réagir entre eux, au moins en partie, lors des différentes phases de fabrication de la composition, en particulier au cours de sa vulcanisation.

### II-1. Elastomère diénique

Par élastomère ou caoutchouc "diénique", on entend de manière connue un élastomère issu au moins en partie (i.e. un homopolymère ou un copolymère) de monomères diènes (monomères porteurs de deux doubles liaisons carbone-carbone, conjuguées ou non).

De manière générale, on entend ici par élastomère diénique "essentiellement insaturé" un élastomère diénique issu au moins en partie de monomères diènes conjugués, ayant un taux de motifs ou unités d'origine diénique (diènes conjugués) qui est supérieur à 15% (% en moles).

C'est ainsi, par exemple, que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%).

Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend en particulier par élastomère diénique susceptible d'être mis en oeuvre dans les compositions conformes à l'invention:
(a) - tout homopolymère obtenu par polymérisation d'un monomère diène conjugué ayant de 4 à 12 atomes de carbone;
(b) - tout copolymère obtenu par copolymérisation d'un ou plusieurs diènes conjugués entre eux ou avec un ou plusieurs composés vinyle aromatique ayant de 8 à 20 atomes de carbone;
(c) - tout copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d) - tout copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, l'homme du métier du pneumatique comprendra que la présente invention, en particulier lorsque la composition de caoutchouc est destinée à une bande de roulement de pneumatique, est en premier lieu mise en oeuvre avec des élastomères diéniques essentiellement insaturés, en particulier du type (a) ou (b) ci-dessus.

A titre de diènes conjugués conviennent notamment le butadiène-1,3, le 2-méthyl-1,3-butadiène, les 2,3-di(alkyle en C1 à C5)-1,3 -butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène.

A titre de composés vinyle-aromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99 % et 20 % en poids d'unités diéniques et de 1 % à 80 % en poids d'unités vinylaromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés et être préparés en dispersion ou en solution ; ils peuvent être couplés et/ou étoilés ou encore fonctionnalisés avec un agent de couplage et/ou d'étoilage ou de fonctionnalisation.

A titre préférentiel conviennent les polybutadiènes et en particulier ceux ayant une teneur en unités -1,2 comprise entre 4% et 80% ou ceux ayant une teneur en cis-1,4 supérieure à 80%, les polyisoprènes, les copolymères de butadiène-styrène et en particulier ceux ayant une teneur en styrène comprise entre 5% et 50% en poids et plus particulièrement entre 20% et 40%, une teneur en liaisons -1,2 de la partie butadiénique comprise entre 4% et 65% , une teneur en liaisons trans-1,4 comprise entre 20% et 80%, les copolymères de butadiène-isoprène et notamment ceux ayant une teneur en isoprène comprise entre 5% et 90% en poids et une température de transition vitreuse ("Tg" - mesurée selon norme ASTM D3418-82) entre -40°C et -80°C, les copolymères isoprène-styrène et notamment ceux ayant une teneur en styrène comprise entre 5% et 50% en poids et une Tg comprise entre -25°C et -50°C.

Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur en unités -1,2 de la partie butadiénique comprise entre 4% et 85%, une teneur en unités trans -1,4 de la partie butadiénique comprise entre 6% et 80%, une teneur en unités -1,2 plus -3,4 de la partie isoprénique comprise entre 5% et 70% et une teneur en unités trans -1,4 de la partie isoprénique comprise entre 10% et 50%, et plus généralement tout copolymère butadiène-styrène-isoprène ayant une Tg comprise entre -20°C et -70°C.

Selon un mode préférentiel de réalisation de l'invention, l'élastomère diénique de la composition conforme à l'invention est choisi dans le groupe des élastomères diéniques fortement insaturés constitué par les polybutadiènes (BR), les polyisoprènes de synthèse (IR), le caoutchouc naturel (NR), les copolymères de butadiène-styrène (SBR), les copolymères de butadiène-isoprène (BIR), les copolymères de butadiène-acrylonitrile (NBR), les copolymères d'isoprène-styrène (SIR), les copolymères de butadiène-styrène-isoprène (SBIR) et les mélanges de ces élastomères.

La composition conforme à l'invention est notamment destinée à une bande de roulement pour pneumatique, qu'il s'agisse d'un pneumatique neuf ou usagé (cas d'un rechapage).

Lorsque une telle bande de roulement est destinée par exemple à un pneumatique tourisme, l'élastomère diénique est de préférence un SBR ou un coupage (mélange) SBR/BR, SBR/NR (ou SBR/IR), ou encore BR/NR (ou BR/IR). Dans le cas d'un élastomère SBR, on utilise notamment un SBR ayant une teneur en styrène comprise entre 20% et 30% en poids, une teneur en liaisons vinyliques de la partie butadiénique comprise entre 15% et 65%, une teneur en liaisons trans-1,4 comprise entre 15% et 75% et une Tg comprise entre -20°C et -55°C, ce copolymère SBR, de préférence préparé en solution (SSBR), étant éventuellement utilisé en mélange avec un polybutadiène (BR) possédant de préférence plus de 90% de liaisons cis-1,4.

Lorsque la bande de roulement est destinée à un pneumatique utilitaire tel que Poids-lourd, l'élastomère diénique est de préférence un élastomère isoprénique. On entend par "élastomère isoprénique", de manière connue, un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. Parmi les copolymères d'isoprène, on citera en particulier les copolymères d'isobutène-isoprène (caoutchouc butyle - IIR), d'isoprène-styrène (SIR), d'isoprène-butadiène (BIR) et d'isoprène-butadiène-styrène (SBIR). L'élastomère isoprénique est de préférence du caoutchouc naturel ou un polyisoprène de synthèse du type cis-1,4. Parmi ces polyisoprènes de synthèse, sont utilisés de préférence des polyisoprènes ayant un taux (% molaire) de liaisons cis-1,4 supérieur à 90%, plus préférentiellement encore supérieur à 98%. Bien entendu, l'élastomère diénique peut être aussi constitué, en partie, d'un autre élastomère fortement insaturé tel que, par exemple, un élastomère SBR.

Selon un autre mode de réalisation avantageux de l'invention, notamment lorsqu'elle est destinée à un flanc de pneumatique, la composition conforme à l'invention peut contenir au moins un élastomère diénique essentiellement saturé, en particulier au moins un copolymère EPDM, que ce copolymère soit par exemple utilisé ou non en mélange avec un ou plusieurs des élastomères diéniques fortement insaturés cités précédemment.

Les compositions de l'invention peuvent contenir un seul élastomère diénique ou un mélange de plusieurs élastomères diéniques, le ou les élastomères diéniques pouvant être utilisés en association avec tout type d'élastomère synthétique autre que diénique, voire avec des polymères autres que des élastomères, par exemple des polymères thermoplastiques.

### II-2. Charge renforçante

La charge blanche ou inorganique utilisée à titre de charge renforçante peut constituer la totalité ou une partie seulement de la charge renforçante totale, dans ce dernier cas associée par exemple à du noir de carbone.

De préférence, dans les compositions de caoutchouc conformes à l'invention, la charge inorganique renforçante constitue la majorité, i.e. plus de 50 % en poids de la charge renforçante totale, plus préférentiellement plus de 80 % en poids de cette charge renforçante totale.

Dans la présente demande, on entend par "charge inorganique renforçante", de manière connue, une charge inorganique ou minérale, quelles que soient sa couleur et son origine (naturelle ou de synthèse), encore appelée charge "blanche" ou parfois charge "claire" par opposition au noir de carbone, cette charge inorganique étant capable de renforcer à elle seule, sans autre moyen qu'un agent de couplage intermédiaire, une composition de caoutchouc destinée à la fabrication de pneumatiques, en d'autres termes capable de remplacer, dans sa fonction de renforcement, une charge conventionnelle de noir de carbone de grade pneumatique.

Préférentiellement, la charge inorganique renforçante est une charge minérale du type siliceuse, en particulier de la silice (SiO₂), ou du type alumineuse, en particulier de l'alumine (Al₂O₃) ou des (oxyde)hydroxydes d'aluminium, ou un mélange de ces différentes charges.

La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. Les silices précipitées hautement dispersibles (dites "HD") sont préférées, en particulier lorsque l'invention est mise en oeuvre pour la fabrication de pneumatiques présentant une faible résistance au roulement ; par silice hautement dispersible, on entend de manière connue toute silice ayant une aptitude importante à la désagglomération et à la dispersion dans une matrice élastomérique, observable de manière connue par microscopie électronique ou optique, sur coupes fines. Comme exemples non limitatifs de telles silices hautement dispersibles préférentielles, on peut citer les silices Ultrasil 7000 et Ultrasil 7005 de la société Degussa, les silices Zeosil 1165MP, 1135MP et 1115MP de la société Rhodia, la silice Hi-Sil EZ150G de la société PPG, les silices Zeopol 8715, 8745 et 8755 de la Société Huber, des silices précipitées traitées telles que par exemple les silices "dopées" à l'aluminium décrites dans la demande EP-A-0735088 précitée.

L'alumine renforçante utilisée préférentiellement est une alumine hautement dispersible ayant une surface BET allant de 30 à 400 m²/g, plus préférentiellement entre 60 et 250 m²/g, une taille moyenne de particules au plus égale à 500 nm, plus préférentiellement au plus égale à 200 nm, telle que décrite dans la demande EP-A-0810258 précitée. Comme exemples non limitatifs de telles alumines renforçantes, on peut citer notamment les alumines "Baikalox" "A125" ou "CR125" (société Baïkowski), "APA-100RDX" (société Condea), "Aluminoxid C" (société Degussa) ou "AKP-G015" (Sumitomo Chemicals).

A titre d'autres exemples de charge inorganique renforçante susceptible d'être utilisée dans les compositions de caoutchouc de l'invention peuvent être encore cités les (oxyde-)hydroxydes d'aluminium ou les oxydes de titane spécifiques décrits dans les demandes WO99/28376, WO00/73372, WO00/73373 précitées.

L'état physique sous lequel se présente la charge inorganique renforçante est indifférent, que ce soit sous forme de poudre, de microperles, de granulés, ou encore de billes. Bien entendu on entend également par charge inorganique renforçante des mélanges de différentes charges inorganiques renforçantes, en particulier de charges siliceuses et/ou alumineuses hautement dispersibles telles que décrites ci-dessus.

Lorsque les compositions de caoutchouc de l'invention sont utilisées comme bandes de roulement de pneumatiques, la charge inorganique renforçante utilisée, en particulier s'il s'agit de silice, a de préférence une surface BET comprise entre 60 et 250 m²/g, plus préférentiellement comprise entre 80 et 200 m²/g.

La charge inorganique renforçante peut être également utilisée en coupage (mélange) avec du noir de carbone. Comme noirs de carbone conviennent tous les noirs de carbone, notamment les noirs du type HAF, ISAF, SAF, conventionnellement utilisés dans les pneus et particulièrement dans les bandes de roulement des pneus. A titre d'exemples non limitatifs de tels noirs, on peut citer les noirs N115, N134, N234, N339, N347, N375.

La quantité de noir de carbone présente dans la charge renforçante totale peut varier dans de larges limites, cette quantité de noir de carbone étant préférentiellement inférieure à la quantité de charge inorganique renforçante présente dans la composition de caoutchouc.

Dans les compositions conformes à l'invention, on préfère toutefois utiliser en association avec la charge inorganique renforçante un noir de carbone en faible proportion, à un taux préférentiel compris entre 2 et 20 pce, plus préférentiellement compris dans un domaine de 5 à 15 pce (parties en poids pour cent parties d'élastomère). Dans les intervalles indiqués, on bénéficie des propriétés colorantes (agent de pigmentation noire) et anti-UV des noirs de carbone, sans pénaliser par ailleurs les performances typiques apportées par la charge inorganique renforçante, à savoir faible hystérèse (résistance au roulement diminuée) et adhérence élevée tant sur sol mouillé que sur sol enneigé ou verglacé.

De manière préférentielle, le taux de charge renforçante totale (charge inorganique renforçante plus noir de carbone, le cas échéant) est compris entre 10 et 200 pce, plus préférentiellement entre 20 et 150 pce (parties en poids pour cent parties d'élastomère), l'optimum étant différent selon les applications visées ; en effet, le niveau de renforcement attendu sur un pneumatique vélo, par exemple, est de manière connue nettement inférieur à celui exigé sur un pneumatique apte à rouler à grande vitesse de manière soutenue, par exemple un pneu moto, un pneu pour véhicule de tourisme ou pour véhicule utilitaire tel que Poids lourd.

Pour les bandes de roulement de pneumatiques aptes à rouler à grande vitesse, la quantité de charge inorganique renforçante, en particulier s'il s'agit de silice, est de préférence comprise entre 30 et 120 pce, plus préférentiellement comprise entre 30 et 100 pce.

Dans le présent exposé, la surface spécifique BET est déterminée de manière connue, selon la méthode de Brunauer-Emmet-Teller décrite dans "The Journal of the American Chemical Society" Vol. 60, page 309, février 1938 et correspondant à la norme française NF T 45-007 (novembre 1987) ; la surface spécifique CTAB est la surface externe déterminée selon cette même norme NF T 45-007.

Enfin, l'homme du métier comprendra que, à titre de charge équivalente de la charge inorganique renforçante décrite dans le présent paragraphe, pourrait être utilisée une charge renforçante du type organique, notamment un noir de carbone pour pneumatique (voir par exemple WO99/28380), recouvert au moins en partie d'une couche inorganique nécessitant quant à elle, de manière connue, l'utilisation d'un agent de couplage pour assurer la liaison avec l'élastomère.

### II-3. Agent de couplage

L'agent de couplage utilisé dans les compositions de caoutchouc de l'invention est donc un organosilane au moins bifonctionnel assurant la liaison entre l'élastomère diénique et la charge inorganique renforçante, et comportant par molécule:
- d'une part au moins un groupe fonctionnel (fonction "X") capable de former une liaison stable avec l'élastomère diénique;
- d'autre part, et c'est là une caractéristique essentielle de l'invention, à titre de fonction "Y", au moins un groupe hydroxyle (OH) sur un atome de silicium - fonction dite hydroxysilyle (≡Si-OH) - lui permettant de se greffer sur la charge inorganique renforçante.

Sans que les définitions ci-après soient limitatives, les compositions de l'invention sont de préférence mises en oeuvre avec un hydroxysilane soufré, c'est-à-dire porteur à titre de fonction X d'un groupe fonctionnel comportant du soufre, en particulier d'un groupement polysulfure Sₓ (avec x ≥ 2, c'est-à-dire le groupement disulfure inclus).

Comme exemples préférentiels de polysulfures d'hydroxysilanes, on citera notamment les polysulfures d'hydroxysilanes répondant à la formule générale (I) qui suit:

(HO)ₐ R₍₃₋ₐ₎ Si―R'―Sₓ―R'―Si R_{(3-b)} (OH)_{b} (I)

dans laquelle:
- les radicaux R, identiques ou différents, sont des groupes hydrocarbonés comportant de préférence de 1 à 15 atomes de carbone;
- les radicaux R', identiques ou différents, sont des groupes divalents destinés à relier le groupe polysulfure aux deux atomes de silicium, comportant de préférence de 1 à 18 atomes de carbone;
- a et b, identiques ou différents, sont égaux à 1 ou 2;
- x est supérieur ou égal à 2.

Dans cette formule (I), la fonction "X" de l'agent de couplage est la fonction polysulfure Sₓ fixée sur les deux atomes de silicium par l'intermédiaire des radicaux R', tandis que la fonction Y est la fonction hydroxysilyle (≡Si-OH) fixée à chaque extrémité.

Les radicaux R, identiques ou différents, linéaires ou ramifiés, comportant de préférence de 1 à 15 atomes de carbone, sont plus préférentiellement choisis parmi les alkyles, cycloalkyles ou aryles, en particulier parmi les alkyles en C₁-C₆, les cycloalkyles en C₅-C₈ et le radical phényle. Parmi ces radicaux, on citera notamment, à titre d'exemples, ceux choisis dans le groupe constitué par méthyle, éthyle, n-propyle, iso-propyle, n-butyle, sec-butyle, tert-butyle, n-pentyle, néopentyle, n-hexyle, 2-éthylhexyle, n-octyle, iso-octyle, cyclopentyle, cyclohexyle, 2-méthylcyclohexyle, phényle, toluyle, benzyle.

Plus préférentiellement encore, les radicaux R, identiques ou différents, sont des alkyles en C₁-C₃ (à savoir méthyle, éthyle, n-propyle, iso-propyle), tout particulièrement choisis parmi méthyle et éthyle.

Les radicaux R', identiques ou différents, substitués ou non substitués, sont de préférence des radicaux hydrocarbonés, saturés ou non saturés, comportant de 1 à 18 atomes de carbone, ces radicaux R' pouvant être interrompus au sein de la chaîne hydrocarbonée par au moins un hétéroatome tel que O, S ou N. Conviennent notamment des groupements alkylène en C₁-C₁₈ ou des groupements arylène en C₆-C₁₂, plus particulièrement des alkylènes en C₁-C₁₀, notamment en C₁-C₄, en particulier ceux choisis parmi méthylène, éthylène et propylène.

En d'autres termes, l'invention est plus préférentiellement mise en oeuvre avec un polysulfure (symétrique ou dissymétrique en ce qui concerne la nature des radicaux R ou R') de bis-(hydroxy-alkyl(C₁-C₁₈)-silylalkyl(C₁-C₁₅)) répondant à la formule générale (I) ci-dessus, en particulier un polysulfure de bis-(hydroxy-alkyl(C₁-C₃)-silylpropyle), dans lesquels sont présents un seul ou deux groupes hydroxyle (plus, respectivement, deux ou un seul groupe alkyle) par atome de silicium.

A titre préférentiel est utilisé un monohydroxysilane, c'est-à-dire un hydroxysilane comportant une seule fonction hydroxyle (OH) par atome de silicium (a=b=1).

Ainsi, parmi les composés de formule (I) précédente, l'invention est plus préférentiellement mise en oeuvre avec un polysulfure de monohydroxysilane, c'est-à-dire un composé répondant à la formule générale (II) ci-après :

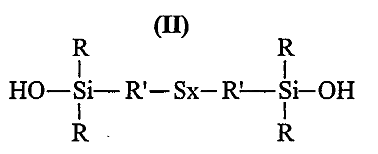

Des organosilanes de formule (II) particulièrement préférentiels sont ceux dans lesquels les radicaux R sont des alkyles en C₁-C₃, les radicaux R' sont des alkylènes en C₁-C₄, x est supérieur ou égal à 2.

Parmi ces derniers, on citera en particulier les polysulfures de bis-[alkyl(C₁-C₄)diméthylsilanol] - soit R = Me (méthyle) - répondant à la formule particulière (II-1) qui suit: 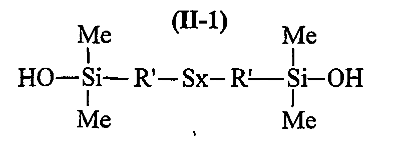 dans laquelle x ≥ 2 et les radicaux R' sont des alkylènes en C₁-C₄, en particulier le méthylène, l'éthylène ou le propylène, plus particulièrement le propylène.

A titre d'exemple, l'invention est avantageusement mise en oeuvre avec un polysulfure de bis-(propyldiméthylsilanol) de formule particulière: 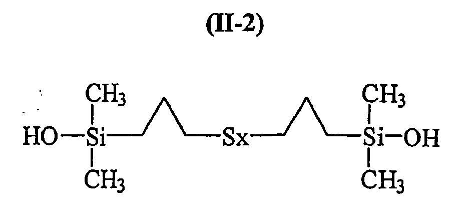 Le nombre x d'atomes de soufre de ces hydroxysilanes peut varier dans une large mesure, par exemple de 2 à 9, selon les conditions particulières de synthèse de l'hydroxysilane ; toutefois, les valeurs de x sont de préférence choisies dans un domaine de 2 (disulfures) à 6 (hexasulfures) en passant par les trisulfures (x=3), les tétrasulfures (x = 4) et pentasulfures (x = 5) correspondants. Plus préférentiellement encore, x est choisi compris dans un domaine de 2 à 4.

Les monohydrojcysilanes polysulfurés de formules (II) (notamment II-1 ou II-2) ci-dessus peuvent être préparés selon un procédé de synthèse comportant les étapes suivantes (R et R' ayant les significations précédentes):
- on part d'un organosilane halogéné (ci-après produit A) de formule (A) (Hal=halogène): 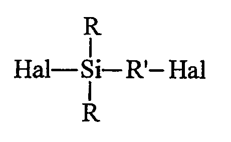
- optionnellement, on lui fait subir une alcoolyse par action d'un alcool (R"-OH) en présence d'une base organique destinée à piéger l'halogénure d'acide formé, pour obtenir un monoallcoxysilane (ci-après produit B) de formule (B): 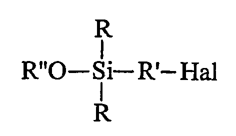
- on conduit, dans un solvant organique inerte, une hydrolyse par action d'un donneur d'hydroxyles :
   - soit sur le produit (A), en présence, dans ce cas, d'une base organique pour piéger l'halogénure d'acide formé, le donneur d'hydroxyles étant de l'eau ;
   - soit, le cas échéant, sur le produit (B), le donneur d'hydroxyles étant une base minérale et le solvant organique étant un solvant polaire ,
   pour obtenir un monohydroxysilane (produit C) de formule (C) : 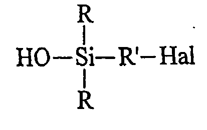
- on conduit finalement une étape de sulfuration sur le produit C, par action d'un polysulfure, pour aboutir au produit de formule (II) visé.

Certaines étapes (alcoolyse, sulfuration) de ce procédé, tout du moins dans leurs principes généraux, ont déjà été appliquées à la synthèse d'alkoxysilanes soufrés tels que des mercaptoalkoxysilanes ou des alkoxysilanes polysulfures (voir notamment FR-A-2149339 ou US-A-4076550, FR-A-2206330, EP-A-0694552 ou US-A-5405985). Mais, à la connaissance des Demanderesses, les étapes ci-dessus n'avaient jusqu'ici jamais été décrites en combinaison pour l'obtention d'hydroxysilanes soufrés.

Les halogènes (Hal) du silane de départ (produit A) peuvent être identiques ou différents, choisis de préférence parmi brome et chlore ; on utilise plus préférentiellement le chlore. D'une manière générale, les halogénosilanes de départ (produits A) et leurs dérivés intermédiaires (produits B ou C) sont des produits liquides ; ils peuvent donc être utilisés tels quels ou bien à l'état dilué dans un solvant approprié, lors de la mise en oeuvre des différentes étapes du procédé de l'invention.

La première étape d'alcoolyse, optionnelle, consiste donc à substituer l'halogène (Hal) porté par l'atome de silicium du produit A par le groupement alkoxyle (OR") d'un alcool, en présence d'une base organique destinée à piéger l'halogénure d'acide libéré au cours de la réaction. Le radical hydrocarboné R" de l'alcool (R"-OH) comporte de préférence de 1 à 8 atomes de carbone ; il est plus préférentiellement choisi parmi les alkyles en C₁-C₆, plus préférentiellement encore parmi les alkyles en C₁-C₃, en particulier le méthyle ou l'éthyle. A titre de base organique destinée à piéger l'halogénure d'acide formé, on peut utiliser une amine, de préférence une amine tertiaire telle que la triéthylamine. Afin de mieux piéger l'halogénure d'acide, l'alcoolyse est conduite à une température qui est de préférence inférieure à 15°C, plus préférentiellement inférieure à 10°C.

L'étape d'hydrolyse peut être également réalisée directement sur le silane halogéné de départ (produit A), par action de l'eau dans un solvant organique inerte, par exemple un éther et en présence d'une base organique destinée comme précédemment à piéger l'halogénure d'acide formé.

On préfère toutefois alcoolyser le silane halogéné de départ avant de l'hydrolyser. Cette hydrolyse du produit B est conduite dans un solvant organique polaire, de préférence un alcool, par action d'une base minérale en solution aqueuse ; la base minérale est de préférence un hydroxyde alcalin ou alcalino-terreux, notamment l'hydroxyde de sodium (NaOH). La base est préférentiellement utilisée en léger excès, cet excès étant neutralisé en fin de réaction par un acide faible tel que le dihydrogénophosphate de potassium. Le solvant organique polaire est de préférence un alcool en C₁-C₆, plus préférentiellement en C₁-C₃, plus particulièrement le méthanol.

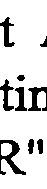

Pour l'étape de sulfuration finale, on peut utiliser un polysulfure (x ≥ 2) d'ammonium ou métallique, de formule M₂Sₓ ou M'Sₓ (M = métal alcalin ou NH₄ ; M' = Zn ou métal alcalino-terreux) ; des exemples de tels composés sont les polysulfures de Na, K, Cs, Rb, Ca, Mg, Zn et NH₄, x étant de préférence compris dans un domaine de 2 à 6, plus préférentiellement de 2 à 4. On utilise de préférence un polysulfure de sodium Na₂Sₓ, en particulier Na₂S₂, Na₂S₃, Na₂S₄, Na₂S₅, Na₂S₆, ce polysulfure étant de préférence généré par action de soufre (S₈) sur Na₂S. De manière connue, la préparation des polysulfures d'ammonium ou métalliques est réalisée dans un solvant, organique ou non, tel que par exemple de l'eau, des alcools, des cétones ou des éthers, solvants dans lesquels les réactifs sont solubles partiellement ou totalement.

Toutefois, afin d'éliminer tout risque de formation de sous-produits du type polysulfures d'alkoxysilanes, due à une réaction parasite d'alcoolyse des fonctions silanols du produit C, on préfère conduire l'étape de sulfuration en l'absence de tout alcool ; on travaille alors de préférence en phase aqueuse, plus préférentiellement dans un milieu biphasique eau/solvant organique (par exemple toluène, xylène, benzène, heptane ou équivalents), comme décrit dans les documents EP-A-0694552 ou US-A-5405985 précités relatifs à la synthèse d'alkoxysilanes polysulfurés. La réaction de sulfuration est alors conduite de manière connue en présence d'un catalyseur de transfert de phase et d'un sel de formule M"Hal ou M"SO₄ (M" choisi parmi Li, Na, K ; Hal choisi parmi F, CI et Br). Le sel utilisé est choisi de préférence parmi NaCl, NaBr, Na₂SO₄ on utilise plus préférentiellement NaCl. La quantité de sel peut varier par exemple de 10% en poids de la solution aqueuse jusqu'à saturation complète de la solution. Le catalyseur de transfert de phase est par exemple le bromure de tétrabutyl-ammonium (TBAB).

L'étape de sulfuration est conduite de préférence sous gaz inerte tel que l'argon. La température du milieu réactionnel n'est pas critique, on peut par exemple travailler à température ambiante ; on préfère toutefois opérer à chaud pour augmenter la vitesse de réaction, par exemple entre 60°C et 100°C voire jusqu'au point d'ébullition du solvant. Le ratio molaire entre l'hydroxysilane (produit C) et le polysulfure (d'ammonium ou métallique) est de préférence ajusté de manière à avoir un léger excès de polysulfure par rapport à la quantité stoechiométrique.

Si la sulfuration est conduite en phase organique, le produit C est lui-même de préférence pré-dilué dans le solvant organique inerte tel qu'un alcool, une cétone ou un éther. Lorsque la réaction est terminée, on élimine par filtration le sel (halogénure de métal) qui s'est formé et on débarrasse le filtrat du solvant organique par distillation sous vide. Dans le cas d'une sulfuration en phase aqueuse ou biphasique (eau/solvant organique), on isole le cas échéant la phase organique contenant le produit D et on distille sous vide le solvant résiduel.

Les hydroxysilanes polysulfurés synthétisés selon le procédé décrit ci-dessus sont en fait des mélanges de polysulfures (par exemple de x=2 à x=9), avec par conséquent une valeur moyenne pour x qui est différente d'une valeur entière. La valeur moyenne visée pour x est préférentiellement comprise entre 2 et 6, plus préférentiellement dans un domaine de 2 à 4.

Plus généralement, dans les compositions de caoutchouc de l'invention, la teneur en hydroxysilane est de préférence supérieure à 1 pce, plus préférentiellement comprise entre 2 et 20 pce. En dessous des minima indiqués l'effet risque d'être insuffisant, alors qu'au delà du maximum préconisé on n'observe généralement plus d'amélioration du couplage, alors que les coûts de la composition augmentent ; pour ces différentes raisons, cette teneur en hydroxysilane est plus préférentiellement encore comprise entre 3 et 12 pce.

L'homme du métier saura ajuster cette teneur en hydroxysilane en fonction de l'application visée, notamment de la partie du pneumatique à laquelle est destinée par exemple la composition de caoutchouc de l'invention, de la nature de l'élastomère diénique et de la quantité de charge inorganique renforçante utilisée. Bien entendu, afin de réduire les coûts des compositions de caoutchouc, il est souhaitable d'en utiliser le moins possible, c'est-à-dire le juste nécessaire pour un couplage suffisant entre l'élastomère diénique et la charge inorganique renforçante. Son efficacité permet, dans un grand nombre de cas, d'utiliser l'hydroxysilane à un taux préférentiel représentant entre 0,5% et 20% en poids par rapport à la quantité de charge inorganique renforçante ; des taux inférieurs à 15%, notamment inférieurs à 10%, sont plus particulièrement préférés.

Les hydroxysilanes précédemment décrits se sont révélés suffisamment efficaces à eux seuls pour le couplage d'un élastomère diénique et d'une charge inorganique renforçante telle que la silice. Sans que ceci soit limitatif, ils peuvent avantageusement constituer le seul agent de couplage présent dans les compositions de caoutchouc de l'invention.

Enfin, l'homme du métier comprendra que les hydroxysilanes précédemment décrits pourraient être préalablement greffés, soit sur l'élastomère diénique (via la fonction "X") de la composition de l'invention, soit, de préférence, sur la charge inorganique renforçante (via la fonction "Y"), la charge inorganique ainsi "précouplée" pouvant ensuite être liée à l'élastomère diénique par l'intermédiaire de la fonction libre "X".

### II-4. Additifs divers

Bien entendu, les compositions de caoutchouc conformes à l'invention comportent également tout ou partie des additifs habituellement utilisés dans les compositions de caoutchouc comportant un élastomère isoprénique et destinées à la fabrication de pneumatiques ou de bandes de roulement de pneumatiques, comme par exemple des plastifiants, des agents de protection tels que cires anti-ozone, anti-ozonants chimiques, anti-oxydants, agents anti-fatigue, des promoteurs d'adhésion, un système de réticulation tel que ceux à base soit de soufre, soit de donneurs de soufre et/ou de peroxyde et/ou de bismaléimides, des accélérateurs de vulcanisation, des activateurs de vulcanisation, etc. A la charge inorganique renforçante peut être également associée, si besoin est, une charge inorganique conventionnelle peu ou non renforçante, par exemple des particules d'argiles, de bentonite, talc, craie, kaolin, oxydes de titane conventionnels (non renforçants).

Les compositions de caoutchouc conformes à l'invention peuvent également contenir, en complément des agents de couplage hydroxysilanes précédemment décrits, des agents de recouvrement de la charge inorganique renforçante, comportant par exemple la seule fonction Y, ou plus généralement des agents d'aide à la mise en oeuvre susceptibles de manière connue, grâce à une amélioration de la dispersion de la charge inorganique dans la matrice de caoutchouc et à un abaissement de la viscosité des compositions, d'améliorer leur faculté de mise en oeuvre à l'état cru, ces agents étant par exemple des alkylalkoxysilanes, notamment des alkyltriéthoxysilanes, comme par exemple le 1-octyl-triéthoxysilane commercialisé par la société Degussa-Hüls sous la dénomination Dynasylan Octeo ou le 1-hexa-décyltriéthoxysilane commercialisé par la société Degussa-Hüls sous la dénomination Si216, des polyols, des polyéthers (par exemple des polyéthylèneglycols), des amines primaires, secondaires ou tertiaires (par exemple des trialcanol-amines), des polyorganosiloxanes hydroxylés ou hydrolysables, par exemple des α,ω-dihydroxy-polyorganosiloxanes (notamment des α,ω-dihydroxy-polydiméthylsiloxanes).

### II-5. Préparation des compositions de caoutchouc

Les compositions sont fabriquées dans des mélangeurs appropriés, en utilisant deux phases de préparation successives bien connues de l'homme du métier : une première phase de travail ou malaxage thermo-mécanique (parfois qualifiée de phase "non-productive") à haute température, jusqu'à une température maximale (notée Tₘₐₓ) comprise entre 110°C et 190°C, de préférence entre 130°C et 180°C, suivie d'une seconde phase de travail mécanique (parfois qualifiée de phase "productive") à plus basse température, typiquement inférieure à 110°C, par exemple entre 40°C et 100°C, phase de finition au cours de laquelle est incorporé le système de réticulation ou vulcanisation ; de telles phases ont été décrites par exemple dans les demandes EP-A-0501227, EP-A-0735088, EP-A-0810258, EP-A-0881252, WO99/28376, WO00/05300 ou WO00/05301 précitées.

Le procédé de fabrication des compositions selon l'invention est caractérisé en ce qu'au moins la charge inorganique renforçante et l'agent de couplage hydroxysilane sont incorporés par malaxage à l'élastomère diénique au cours de la première phase dite non-productive, c'est-à-dire que l'on introduit dans le mélangeur et que l'on malaxe thermomécaniquement, en une ou plusieurs étapes, au moins ces différents constituants de base jusqu'à atteindre une température maximale comprise entre 110°C et 190°C, de préférence comprise entre 130°C et 180°C.

A titre d'exemple, la première phase (non-productive) est conduite en une seule étape thermomécanique au cours de laquelle on introduit, dans un mélangeur approprié tel qu'un mélangeur interne usuel, tous les constituants de base nécessaires, les éventuels agents de recouvrement ou de mise en oeuvre complémentaires et autres additifs divers, à l'exception du système de vulcanisation. Une seconde étape de travail thermomécanique peut être ajoutée dans ce mélangeur interne, après tombée du mélange et refroidissement intermédiaire (température de refroidissement de préférence inférieure à 100°C), dans le but de faire subir aux compositions un traitement thermomécanique complémentaire, notamment pour améliorer encore la dispersion, dans la matrice élastomérique, de la charge inorganique renforçante et de son agent de couplage. La durée totale du malaxage, dans cette phase non-productive, est de préférence comprise entre 2 et 10 minutes.

Après refroidissement du mélange ainsi obtenu, on incorpore alors le système de vulcanisation à basse température, généralement dans un mélangeur externe tel qu'un mélangeur à cylindres ; le tout est alors mélangé (phase productive) pendant quelques minutes, par exemple entre 5 et 15 minutes.

La composition finale ainsi obtenue est ensuite calandrée, par exemple sous la forme d'une feuille, d'une plaque ou encore extrudée, par exemple pour former un profilé de caoutchouc utilisé pour la fabrication de semi-finis tels que des bandes de roulement, des nappes sommet, des flancs, des nappes carcasse, des talons, des protecteurs, des chambres à air ou des gommes intérieures étanches pour pneu sans chambre.

La vulcanisation (ou cuisson) est conduite de manière connue à une température généralement comprise entre 130°C et 200°C, pendant un temps suffisant qui peut varier par exemple entre 5 et 90 min en fonction notamment de la température de cuisson, du système de vulcanisation adopté, de la cinétique de vulcanisation de la composition considérée ou encore de la taille du pneumatique.

Le système de vulcanisation proprement dit est préférentiellement à base de soufre et d'un accélérateur primaire de vulcanisation, en particulier d'un accélérateur du type sulfénamide. A ce système de vulcanisation de base viennent s'ajouter, incorporés au cours de la première phase non-productive et/ou au cours de la phase productive, divers accélérateurs secondaires ou activateurs de vulcanisation connus tels que oxyde de zinc, acide stéarique, dérivés guanidiques (en particulier diphénylguanidine), etc. Le soufre est utilisé à un taux préférentiel compris entre 0,5 et 10 pce, plus préférentiellement compris entre 0,5 et 5,0 pce, par exemple entre 0,5 et 3,0 pce lorsque l'invention est appliquée à une bande de roulement de pneumatique. L'accélérateur primaire de vulcanisation est utilisé à un taux préférentiel compris entre 0,5 et 10 pce, plus préférentiellement compris entre 0,5 et 5,0 pce en particulier lorsque l'invention s'applique à une bande de roulement de pneumatique.

Il va de soi que l'invention concerne les compositions de caoutchouc précédemment décrites tant à l'état dit "cru" (i.e., avant cuisson) qu'à l'état dit "cuit" ou vulcanisé (i.e., après réticulation ou vulcanisation).

Les compositions conformes à l'invention peuvent être utilisées seules ou en coupage (i.e., en mélange) avec toute autre composition de caoutchouc utilisable pour la fabrication de pneumatiques.

### III. EXEMPLES DE REALISATION DE L'INVENTION

Dans les exemples de réalisation qui suivent, l'invention est mise en oeuvre avec un polysulfure de bis-(propyldiméthylsilanol) de formule particulière (11-2) :

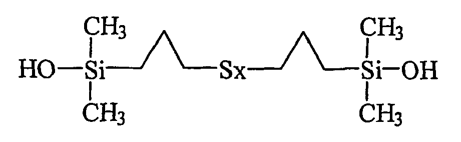

### III-1. Synthèse de l'hydroxysilane polysulfuré

Cet essai décrit la synthèse du polysulfure de formule (II-2) ci-dessus (ci-après dénommé produit D) selon un procédé réalisé en deux ou trois étapes, à partir du chloropropyldiméthylchlorosilane (ci-après dénommé produit A), via le chloropropyl-diméthyléthoxysilane (ci-après dénommé produit B ; voie optionnelle) et le chloropropyl-diméthylsilanol (ci-après dénommé produit C).

Le schéma de synthèse appliqué est le suivant :

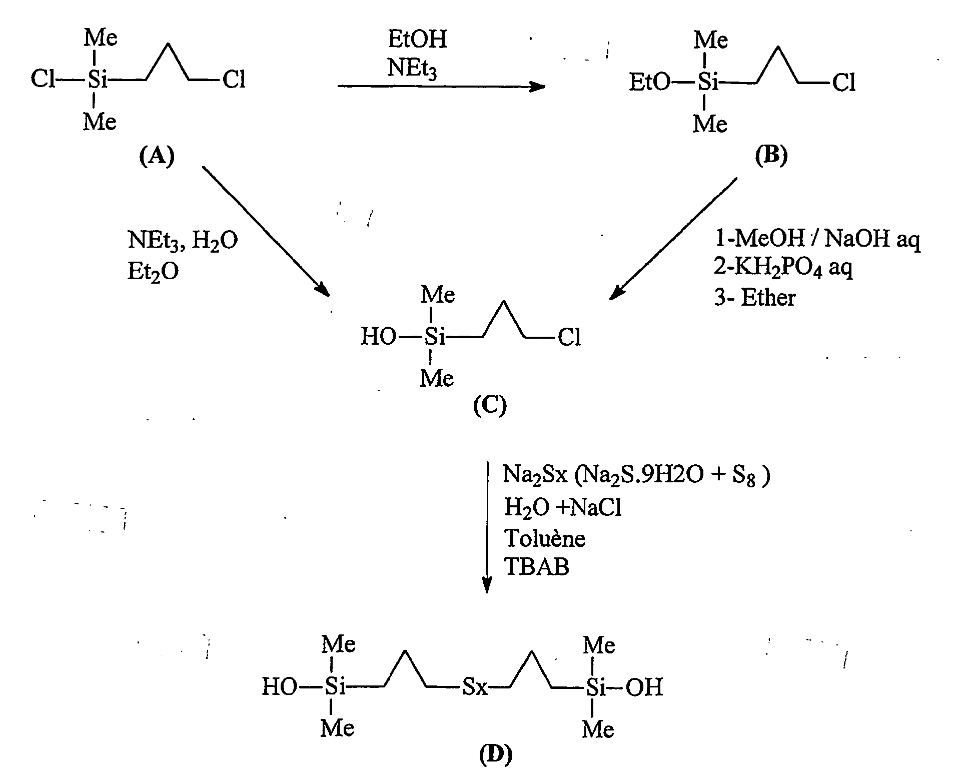

### a) préparation du chloropropyl-diméthyléthoxysilane (produit B)

La première étape consiste en une alcoolyse permettant de substituer le chlore porté par l'atome de silicium du produit A par un groupement éthoxyle (EtO) de l'éthanol, cette réaction étant menée en présence de triéthylamine destinée à piéger l'acide chlorhydrique libéré au cours de la réaction.

Dans un tricol de 2 L (litre) (préalablement séché dans une étuve pendant 24 h), surmonté d'un réfrigérant et muni d'une agitation magnétique, on introduit, sous courant d'argon, 950 mL d'éthanol (grade Normapur) puis 288 mL de triéthylamine (2,07 mol soit 209 g) à l'aide d'une seringue. Le mélange est alors refroidi à une température d'environ 5°C, avant de débuter l'addition du produit A (237,7 g soit 1,38 mol - produit de la société ABCR commercialisé sous la référence SIC2336.0), réalisée grâce à une pompe péristaltique ; l'acide chlorhydrique libéré est immédiatement piégé par la triéthylamine en formant le chlorhydrate de triéthylamine.

Une fois la coulée terminée (après environ 8h), le bain de glace est retiré tandis que l'agitation est poursuivie à la température ambiante toute la nuit, sous courant d'argon. Après huit heures, l'analyse CPG (chromatographie en phase gazeuse) montre la disparition du pic correspondant au produit A de départ et la formation du chloropropyl-diméthyléthoxysilane (produit B). Le milieu réactionnel est alors filtré sur tube d'Alhin afin de séparer le produit B en solution dans l'éthanol du chlorhydrate de triéthylamine.

Le filtrat contenant le produit B est concentré puis distillé sous vide (2 mm Hg ; température de bain d'huile 70°C ; température en haut de colonne 45°C), afin d'éliminer l'excès de triéthylamine libre et d'isoler le produit B à l'état pur.

On recueille ainsi 160 g d'un liquide incolore dont les analyses de RMN et de spectrométrie de masse confirment bien qu'il s'agit du produit B visé répondant à la formule suivante :

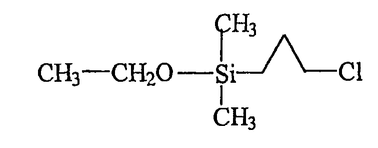

### b) préparation du chloropropyl-diméthylsilanol (produit C)

Cette deuxième étape consiste à hydrolyser l'éthoxysilane précédent (en solution dans le méthanol) de façon à obtenir l'hydroxysilane. Cette réaction est menée par action d'une solution aqueuse de NaOH ; après réaction, l'excès de base introduit initialement est neutralisé par le dihydrogénophosphate de potassium.

Dans un tricol de 100 mL, surmonté d'un réfrigérant et muni d'une agitation magnétique, on introduit 2,62 g de soude (65 mmol soit 2,4 équivalents par rapport au produit B) que l'on dissout dans 15 mL d'eau déminéralisée. Après dissolution complète et lorsque la température de la solution est revenue à la température ambiante, on ajoute 20 mL de méthanol puis, à l'aide d'une ampoule de coulée, le produit B précédemment préparé (5 g soit 27,7 mmol) dilué dans 35 mL de méthanol. Le milieu réactionnel est alors maintenu sous agitation pendant 90 min, puis versé dans une solution aqueuse de dihydrogénophosphate de potassium (16 g de KH₂PO₄ dans 200 mL d'eau). La solution obtenue, qui présente un pH égal à 7, est agitée quelques minutes avant d'être mise en présence de 200 mL d'éther destinés à extraire le produit C formé. Le milieu biphasique est soumis alors à une agitation, pendant environ 30 à 45 min, puis introduit dans une ampoule à décanter. La phase organique isolée est lavée une fois à l'eau puis séchée sur du MgSO₄ avant d'être filtrée puis concentrée sous vide.

Le chromatogramme CPG du produit brut réactionnel ainsi recueilli présente alors trois pics que l'on peut attribuer respectivement au (i) chloropropyl-diméthylméthoxysilane, résultant vraisemblablement de la réaction du méthanol sur le produit B (de l'ordre de 2% en motifs d'après la RMN ¹H), au (ii) produit C visé, largement majoritaire (85% en motifs d'après la RMN ¹H), ainsi qu'au (iii) bis(chloropropyl)-tétraméthyldisiloxane (présent à 13% en motifs).

Une distillation sous vide, réalisée dans un four à boules (Kügelrohr), permet d'isoler le produit C. Au cours de cette distillation, la température du four est choisie préférentiellement inférieure à 45°C, pour limiter tout risque de voir le produit C se condenser en disiloxane correspondant. Ainsi, après avoir éliminé le chloropropyl-diméthylméthoxysilane en appliquant un vide de 1,3 mbar et une température de 35°C, on isole le produit C sous un vide de 1 mbar en chauffant à 40°C ; le bis(chloropropyl)-tétraméthyldisiloxane de par sa température d'ébullition plus élevée reste dans le ballon de distillation.

On isole ainsi 2,48 g d'un liquide incolore pur dont les analyses de RMN et de spectrométrie de masse confirment l'obtention du produit C répondant à la formule suivante :

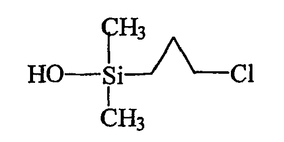

Comme cela a déjà été expliqué précédemment, on peut aussi préparer le produit C ci-dessus directement par hydrolyse du produit A de départ, dans un solvant organique inerte (éther), en présence d'eau comme donneur d'hydroxyles et de triéthylamine destinée à piéger l'acide chlorhydrique libéré. On introduit de préférence un excès d'eau de manière à favoriser la réaction souhaitée, et éviter la réaction de condensation du silanol généré sur le chlorosilane additionné. L'emploi d'un léger excès de triéthylamine assure le piégeage total de l'acide chlorhydrique, la triéthylamine résiduelle étant distillée une fois la réaction terminée.

On procède plus précisément comme suit: dans un tricol de 500 mL, surmonté d'un réfrigérant et muni d'une agitation magnétique, on introduit 9,78 mL de triéthylamine (70,1 mmol, soit 1,5 équivalents par rapport au produit A), 3,36 g d'eau (187 mmol, soit 4 équivalents par rapport au produit A) puis 150 mL d'éther. On refroidit cette solution à l'aide d'un bain de glace (température < 10°C) avant d'additionner lentement une solution de produit A (8,0 g, soit 46,7 mmol dans 80 mL d'éther). On observe l'apparition immédiate d'un précipité blanc qui correspond au chlorhydrate de triéthylamine. Lorsque l'ajout de produit A est terminé, l'agitation du milieu réactionnel est poursuivie pendant 30 min, en restant à une température inférieure à 10°C. Le précipité formé est alors éliminé par filtration et le filtrat recueilli est séché sur du sulfate de magnésium, filtré puis concentré sous vide. La triéthylamine résiduelle est éliminée par distillation. On recueille ainsi 6,1 g d'un liquide jaune vif qui correspond, d'après les analyses réalisées en RMN et en spectrométrie de masse, au produit C visé (pureté du produit supérieure à 95%).

### c) préparation de l'hydroxysilane polysulfuré (produit D)

Dans cette dernière étape, le polysulfure de sodium, généré par insertion de soufre dans du sulfure de sodium Na₂S en milieu aqueux, vient substituer l'atome de chlore de deux molécules du produit C en solution dans du toluène. La réaction est conduite en présence d'un catalyseur de transfert de phase (TBAB) et de chlorure de sodium NaCl.

Dans un tricol de 250 mL, surmonté d'un réfrigérant et muni d'une agitation magnétique, on introduit 3,50 g (soit 14,5 mmol) de Na₂S.9H₂O ainsi que 1,40 g (soit 43,7 mmol) de soufre qui sont dissous dans 40 mL d'une solution aqueuse de NaCl (5,0 g soit 85,8 mmol) et 8 mL de toluène. Ce mélange est chauffé à 85°C ; on observe, lors de la montée en température, que le milieu réactionnel passe de la couleur jaune à la couleur rouge foncé.

Une fois la température de consigne atteinte, on introduit en une seule fois 0,25 g de TBAB (soit 0,77 mmol), puis on commence l'addition goutte à goutte du produit C (4,60 g soit 28,6 mmol) en solution dans 30 mL de toluène. Au cours de l'addition, la phase toluénique présente une coloration rouge vif virant progressivement à l'orange, tandis que la phase aqueuse initialement rouge vif pâlit jusqu'à devenir incolore et limpide, une fois la coulée terminée. La réaction est ainsi poursuivie pendant 75 min, à la température de 85°C, puis le milieu réactionnel est refroidi sous argon.

Le milieu réactionnel est ensuite transvasé dans une ampoule à décanter de façon à isoler la phase toluénique, qui est séchée sur du sulfate de magnésium après avoir été lavée à l'eau. La solution organique est ensuite filtrée et reprise à l'éther avant d'être distillée dans un four à boules (40°C), afin d'évacuer le chloropropyl-diméthylsilanol (produit C) résiduel.

On recueille finalement 3,82 g d'un liquide rouge-orangé visqueux dont les analyses de RMN et de spectrométrie de masse confirment qu'il comporte (en % molaire):
- environ 95 % de polysulfure de bis-(propyldiméthylsilanol) de formule (II-2): 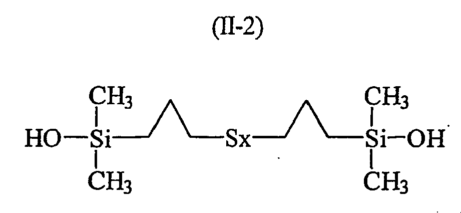
- environ 5 % de composé siloxane cyclique de formule (II-3):

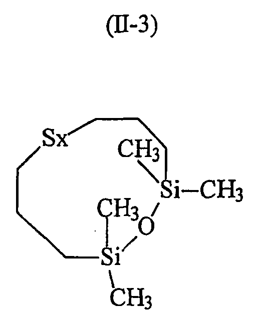

Le produit D ainsi synthétisé est en fait constitué d'une distribution de polysulfures, allant du disulfure (x=2) à l'hexasulfure (x=6), centrée sur une valeur moyenne x=3,7. Le taux de disulfure S₂, déterminé par RMN, est égal à environ 18% des motifs polysulfures.

Ce produit est donc constitué, comme c'est le cas notamment pour des polysulfures d'alkoxysilanes comme le TESPT, d'une distribution de polysulfures dont la valeur moyenne des x est proche de 4. On comprendra que des conditions de synthèse modifiées permettraient d'obtenir d'autres distributions de polysulfures, avec des valeurs moyennes de x variables mais de préférence comprises entre 2 et 6, plus préférentiellement comprises dans un domaine de 2 à4.

### III-2. Préparation des compositions de caoutchouc

On procède pour les essais qui suivent de la manière suivante: on introduit dans un mélangeur interne, rempli à 70% et dont la température initiale de cuve est d'environ 60°C, l'élastomère diénique (ou le mélange d'élastomères diéniques, le cas échéant), la charge renforçante, l'agent de couplage, puis les divers autres ingrédients à l'exception du système de vulcanisation. On conduit alors un travail thermomécanique (phase non-productive) en une ou deux étapes (durée totale du malaxage égale à environ 7 min), jusqu'à atteindre une température maximale de "tombée" d'environ 165°C. On récupère le mélange ainsi obtenu, on le refroidit puis on ajoute soufre et accélérateur sulfénamide sur un mélangeur externe (homo-finisseur) à 30°C, en mélangeant le tout (phase productive) pendant 3 à 4 minutes.

Les compositions ainsi obtenues sont ensuite calandrées sous la forme de plaques (épaisseur de 2 à 3 mm) ou de feuilles fines de caoutchouc pour la mesure de leurs propriétés physiques ou mécaniques, ou extrudées pour former des profilés utilisables directement, après découpage et/ou assemblage aux dimensions souhaitées, par exemple comme produits semi-finis pour pneumatiques, en particulier comme bandes de roulement de pneumatiques.

### III-3. Essais de caractérisation

Cet essai a pour but de démontrer les performances améliorées d'une composition conforme à l'invention, comparée à une composition conventionnelle utilisant du TESPT.

On prépare donc pour cela deux compositions de caoutchouc à base d'élastomères diéniques (SSBR et BR) renforcées de silice, notées C-1 et C-2, ces compositions étant destinées à des bandes de roulement pour pneumatiques tourisme. Ces deux compositions sont identiques, exception faite de l'agent de couplage utilisé :
- composition C-1 : TESPT;
- composition C-2 : produit D synthétisé ci-dessus.

Les deux organosilanes testés sont utilisés à un taux inférieur à 8 pce, cette quantité représentant moins de 10% en poids par rapport à la quantité de charge inorganique renforçante. On rappelle que le TESPT est le tétrasulfure de bis(3-triéthoxysilylpropyl), de formule [(C₂H₅O)₃Si(CH₂)₃S₂]₂ ; il est commercialisé par exemple par la société Degussa sous la dénomination "Si69" (ou "X50S" lorsqu'il est supporté à 50% en poids sur du noir de carbone), ou encore par la société Witco sous la dénomination "Silquest A1289" (dans les deux cas, mélange commercial de polysulfures Sₓ avec une valeur moyenne pour x qui est proche de 4).

La formule développée du TESPT est: 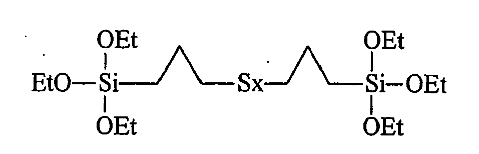 On notera que la structure ci-dessus est très proche de celle de l'hydroxysilane de formule (II-2), ce dernier ne s'en différenciant que par la présence d'un groupe hydroxyle et de deux méthyles en lieu et place des trois groupes alkoxyles conventionnels.

Les tableaux 1 et 2 donnent la formulation des deux compositions (tableau 1 - taux des différents produits exprimés en pce), leurs propriétés avant et après cuisson (environ 30 min à 150°C) ; le système de vulcanisation est constitué par soufre et sulfénamide. Les deux compositions testées comportent en outre (non indiqué dans le tableau 1) une faible proportion de noir de carbone N330 (6 pce) utilisé en tant qu'agent de pigmentation noire et anti-UV.

Les figures 1 et 2 annexées reproduisent respectivement les rhéogrammes (couple en dN.m en fonction de la durée de vulcanisation en min) et les courbes de module (en MPa) en fonction de l'allongement (en %) ; ces courbes sont notées C1 et C2 sur la figure 1, puis C1' et C2' sur la figure 2, et elles correspondent respectivement aux compositions C-1 et C-2.

L'examen des différents résultats du tableau 2 conduit aux observations suivantes:
- la composition de l'invention C-2 montre un temps de grillage plus court que celui de la composition témoin C-1, mais ce temps T5 reste suffisant pour offrir une marge de sécurité satisfaisante vis-à-vis du problème de grillage;
- les valeurs de plasticité Mooney restent basses (85 à 90 UM) dans tous les cas, la valeur la plus basse étant par ailleurs enregistrée sur la composition C-2 ; ceci est indicateur d'une très bonne aptitude des compositions de l'invention à la mise en oeuvre à l'état cru, au moins aussi bonne que celle des compositions conventionnelles utilisant des polysulfures d'alkoxysilanes;
- après cuisson, la composition de l'invention C-2, comparée à la composition témoin, présente des valeurs de module sous forte déformation (M100 et M300) et un rapport (M300/M100) très proches, autant d'indicateurs clairs pour l'homme du métier de la qualité du renforcement apporté par la charge inorganique et son agent de couplage ;
- les propriétés d'hystérèse apparaissent légèrement améliorées pour la composition de l'invention, comme illustré par une valeur plus basse de tan(δ)max (synonyme d'une faible résistance au roulement) ;
- enfin et surtout, on note que la composition de l'invention se distingue, de manière inattendue, par une constante de vitesse de conversion K qui est plus de deux fois supérieure à celle de la composition témoin ; en d'autres termes la cuisson de la composition peut être réalisée dans un temps nettement plus court.

Les rhéogrammes de la figure 1 annexée confirment bien la supériorité de la composition de l'invention C-2 : délai d'induction voisin de celui de la composition témoin ; couple maximal identique à celui de la composition témoin, mais atteint dans un temps nettement plus court; constante de vitesse de conversion K plus élevée.

La figure 2 confirme aussi les observations précédentes : la courbe C2' (composition C-2) et la courbe C1' (composition témoin C-1) sont quasiment confondues, en particulier pour les plus grands allongements qui sont représentatifs du renforcement et donc de l'aptitude des compositions de caoutchouc à résister à l'usure.

En résumé, le comportement global de la composition C-2 de l'invention illustre non seulement une haute qualité de la liaison (ou couplage) entre la charge inorganique renforçante et l'élastomère diénique, au moins égale à celle disponible avec des polysulfures d'alkoxysilanes usuels tels que le TESPT, mais aussi, de manière inattendue, une aptitude à la vulcanisation très nettement améliorée.

Le remplacement de ces alkoxysilanes par des hydroxysilanes présente par ailleurs un avantage notable du point de vue de l'environnement et du problème de dégagement des VOC *("volatile organic compounds''),* les groupes alkoxyles de ces alkoxysilanes (tels que les groupes éthoxyles du TESPT) étant en effet à l'origine du dégagement d'alcool (éthanol), tant au cours de la fabrication des compositions de caoutchouc elles-mêmes que lors de la cuisson des articles en caoutchouc incorporant ces compositions.

L'invention trouve des applications particulièrement avantageuses dans les compositions de caoutchouc utilisables pour la fabrication de bandes de roulement de pneumatiques présentant à la fois une faible résistance au roulement et une résistance élevée à l'usure, en particulier lorsque ces bandes de roulement sont destinées à des pneumatiques pour véhicules tourisme ou pour véhicules industriels du type Poids-lourd.

**Tableau 1**

| Composition N°: | C-1 | C-2 |
|---|---|---|
| SBR (1) | 75 | 75 |
| BR (2) | 25 | 25 |
| silice (3) | 80 | 80 |
| alkoaysilane (4) | 6.4 | - |
| produit D (5) | - | 4.6 |
| DPG (6) | 1.5 | 1.5 |
| ZnO | 2.5 | 2.5 |
| acide stéarique | 2 | 2 |
| antioxydant (7) | 1.9 | 1.9 |
| soufre | 1.1 | 1.1 |
| accélérateur (8) | 2 | 2 |

| | | |
|---|---|---|
| (1) SBR avec 59,5% de motifs polybutadiène 1-2 ; 26,5% de styrène ; étendu avec 37,5% d'huile aromatique (soit 37,5 pce d'huile pour 100 pce de SBR sec) ; Tg = -29 °C ; exprimé en SBR sec; | | |

(2) BR avec 4,3 % de 1-2 ; 2,7% de trans ; 93% de cis 1-4 (Tg = -106°C);
(3) silice type "HD" - "Zeosil 1165MP" de la société Rhodia sous forme de microperles (BET et CTAB : environ 150-160 m²/g);
(4) TESPT ("Si69" de la société DEGUSSA-HÜLS);
(5) produit D synthétisé (polysulfure de bis-(propyl-diméthylsilanol) à 95 mol %);
(6) diphénylguanidine ("Vulcacit D" de la société Bayer);
(7) N-1,3-diméthylbutyl-N-phényl-para-phénylènediamine ("Santoflex 6-PPD" de la société Flexsys);
(8) N-cyclohexyl-2-benzothiazyl-sulfénamide ("Santocure CBS" de la société Flexsys).

**Tableau 2**

| Composition N°: | C-1 | C-2 |
|---|---|---|
| *Propriétés avant cuisson:* | | |
| ML1+4 (UM) | 90 | 85 |
| TS (min) | 20 | 13 |
| tᵢ(min) | 9 | 7 |
| t₉₉ (min) | 41 | 21 |
| K(min⁻¹) | 0.14 | 0.32 |
| t₉₉- tᵢ (min) | 32 | 14 |
| Δ Couple | 17.8 | 19.6 |
| *Propriétés après cuisson:* | | |
| M10 (MPa) | 7.0 | 6.8 |
| M100 (MPa) | 2.6 | 2.8 |
| M300 (MPa) | 4.4 | 4.3 |
| M300/M100 | 1.7 | 1.6 |
| tan (δ)ₘₐₓ | 0.310 | 0.299 |
| Contrainte à la rupture (MPa) | 20.6 | 20.8 |
| Allongement à la rupture (%) | 416 | 443 |

## Revendications

1. Composition élastomérique à base d'au moins un élastomère diénique, une charge inorganique à titre de charge renforçante, un organosilane polyfonctionnel à titre d'agent de couplage (charge inorganique/élastomère diénique), porteur d'au moins deux fonctions notées "X" et "Y", greffable d'une part sur l'élastomère au moyen de la fonction X et d'autre part sur la charge inorganique au moyen de la fonction Y, **caractérisée en ce que** ladite fonction Y est une fonction hydroxysilyle (≡Si-OH).

2. Composition selon la revendication 1, l'élastomère diénique étant choisi dans le groupe constitué par les polybutadiènes, le caoutchouc naturel, les polyisoprènes de synthèse, les copolymères de butadiène, les copolymères d'isoprène et les mélanges de ces élastomères.

3. Composition selon la revendication 2, les copolymères de butadiène et ceux d'isoprène étant choisis parmi les copolymères de butadiène-styrène, les copolymères de butadiène-isoprène, les copolymères d'isoprène-styrène, les copolymères de butadiène-acrylonitrile, les copolymères de butadiène-styrène-isoprène et les mélanges de ces copolymères.

4. Composition selon l'une quelconque des revendications 1 à 3, comportant entre 10 et 200 pce (parties en poids pour cent d'élastomère) de charge inorganique renforçante.

5. Composition selon l'une quelconque des revendications 1 à 4, la quantité d'hydroxysilane étant comprise entre 1 et 20 pce.

6. Composition selon l'une quelconque des revendications 1 à 5, l'hydroxysilane étant porteur d'un groupement soufré à titre de fonction X, de préférence un polysulfure d'hydroxysilane.

7. Composition selon la revendication 6, le polysulfure d'hydroxysilane répondant à la formule générale :
(HO)ₐ R₍₃₋ₐ₎ Si―R'―Sₓ ―R'―Si R_{(3-b)} (OH)_{b} **(I)**
dans laquelle :
- les radicaux R, identiques ou différents, sont des groupes hydrocarbonés comportant de préférence de 1 à 15 atomes de carbone;
- les radicaux R', identiques ou différents, sont des groupes de liaison divalents comportant de préférence de 1 à 18 atomes de carbone;
- a et b, identiques ou différents, sont égaux à 1 ou 2;
- x est supérieur ou égal à 2.

8. Composition selon l'une quelconque des revendications 1 à 7, l'hydroxysilane étant un mono-hydroxysilane (a=b=1).

9. Composition selon les revendications 7 ou 8, dans laquelle les radicaux R sont choisis parmi les alkyles en C₁-C₆, les cycloalkyles en C₅-C₈ et le radical phényle ; les radicaux R' sont choisis parmi les alkylènes en C₁-C₁₈ et les arylènes en C₆-C₁₂.

10. Composition selon la revendication 9, les radicaux R étant choisis parmi les alkyles en C₁-C₆ et les radicaux R' parmi les alkylènes en C₁-C₁₀.

11. Composition selon la revendication 10, l'hydroxysilane étant un polysulfure de mono-hydroxysilane de formule (II): 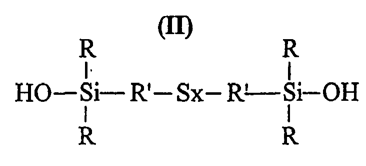 dans laquelle les radicaux R sont des alkyles en C₁-C₃, de préférence le méthyle ; les radicaux R' sont des alkylènes en C₁-C₄, de préférence méthylène, éthylène ou propylène ; x est supérieur ou égal à 2.

12. Composition selon la revendication 11, l'hydroxysilane étant un polysulfure de bis-(propyldiméthylsilanol) de formule particulière (II-2):

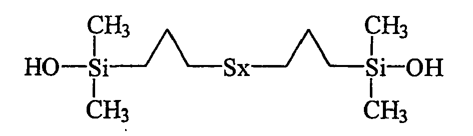

13. Composition selon l'une quelconque des revendications 1 à 12, la quantité d'hydroxysilane représentant entre 0,5% et 20% en poids par rapport à la quantité de charge inorganique renforçante.

14. Composition selon l'une quelconque des revendications 1 à 13, la charge inorganique renforçante étant majoritairement de la silice.

15. Composition selon l'une quelconque des revendications 1 à 14, la charge inorganique renforçante formant la totalité de la charge renforçante.

16. Composition selon l'une quelconque des revendications 1 à 14, comportant en outre du noir de carbone.

17. Composition selon la revendication 16, le noir de carbone étant présent à un taux compris entre 2 et 20 pce.

18. Composition selon la revendication 17, le noir de carbone étant présent à un taux compris dans un domaine de 5 à 15 pce.

19. Composition selon l'une quelconque des revendications 2 à 18, l'élastomère diénique étant un copolymère de butadiène-styrène (SBR) ayant une teneur en styrène comprise entre 20% et 30% en poids, une teneur en liaisons vinyliques de la partie butadiénique comprise entre 15% et 65%, une teneur en liaisons trans-1,4 comprise entre 20% et 75% et une température de transition vitreuse comprise entre -20°C et -55°C.

20. Composition selon la revendication 19, le SBR étant un SBR préparé en solution (SSBR).

21. Composition selon les revendications 19 ou 20, le SBR étant utilisé en mélange avec un polybutadiène.

22. Composition selon la revendication 21, le polybutadiène possédant plus de 90% de liaisons cis-1,4.

23. Composition selon l'une quelconque des revendications 2 à 18, l'élastomère diénique étant un élastomère isoprénique, de préférence un polyisoprène de synthèse ou du caoutchouc naturel.

24. Composition selon l'une quelconque des revendications 1 à 23 **caractérisée en ce qu'**elle se trouve à l'état vulcanisé.

25. Procédé pour préparer une composition élastomérique à cinétique de vulcanisation améliorée, **caractérisé en ce qu'**on incorpore à au moins un élastomère diénique, au moins une charge inorganique à titre de charge renforçante et un organosilane polyfonctionnel à titre d'agent de couplage (charge inorganique/élastomère diénique), porteur d'au moins deux fonctions notées "X" et "Y", greffable d'une part sur l'élastomère au moyen de la fonction X et d'autre part sur la charge inorganique au moyen de la fonction Y, ladite fonction Y étant une fonction hydroxysilyle (≡Si-OH), et **en ce qu'**on malaxe thermomécaniquement le tout, en une ou plusieurs étapes, jusqu'à atteindre une température maximale comprise entre 110°C et 190°C.

26. Procédé selon la revendication 25, l'organosilane étant un hydroxysilane soufré, de préférence un polysulfure d'hydroxysilane.

27. Procédé selon la revendication 26, le polysulfure d'hydroxysilane répondant à la formule générale (I):
(HO)ₐ R₍₃₋ₐ₎ Si―R'―Sₓ―R'―Si R_{(3-b)} (OH)_{b} (I)
dans laquelle :
- les radicaux R, identiques ou différents, sont des groupes hydrocarbonés comportant de préférence de 1 à 15 atomes de carbone;
- les radicaux R', identiques ou différents, sont des groupes de liaison divalents comportant de préférence de 1 à 18 atomes de carbone;
- a et b, identiques ou différents, sont égaux à 1 ou 2;
- x est supérieur ou égal à 2.

28. Procédé selon la revendication 27, l'hydroxysilane étant un mono-hydroxysilane (a=b=1).

29. Utilisation d'une composition de caoutchouc conforme à l'une quelconque des revendications 1 à 24 pour la fabrication de pneumatiques ou de produits semi-finis destinés aux pneumatiques, ces produits semi-finis étant choisis en particulier dans le groupe constitué par les bandes de roulement, les sous-couches, les nappes sommet, les flancs, les nappes carcasse, les talons, les protecteurs, les chambres à air et les gommes intérieures étanches pour pneumatique sans chambre.

30. Pneumatique comportant une composition de caoutchouc conforme à l'une quelconque des revendications 1 à 24.

31. Produit semi-fini pour pneumatique comportant une composition de caoutchouc conforme à l'une quelconque des revendications 1 à 24, ce produit étant choisi en particulier dans le groupe constitué par les bandes de roulement, les sous-couches de ces bandes de roulement, les nappes sommet, les flancs, les nappes carcasse, les talons, les protecteurs, les chambres à air et les gommes intérieures étanches pour pneu sans chambre.

32. Produit semi-fini selon la revendication 31, consistant en une bande de roulement de pneumatique.

33. Bande de roulement de pneumatique selon la revendication 32, formée d'une composition de caoutchouc selon l'une quelconque des revendications 19 à 23.

34. Pneumatique comportant une bande de roulement selon la revendication 33.

35. Utilisation à titre d'agent de couplage (charge inorganique/élastomère diénique), dans une composition à base d'élastomère diénique renforcée par une charge inorganique, d'un organosilane polyfonctionnel porteur d'au moins deux fonctions notées "X" et "Y", greffable d'une part sur l'élastomère au moyen de la fonction X et d'autre part sur la charge inorganique au moyen de la fonction Y, **caractérisée en ce que** ladite fonction Y est une fonction hydroxysilyle (≡Si-OH).

36. Utilisation selon la revendication 35, l'organosilane étant un hydroxysilane soufré, de préférence un polysulfure d'hydroxysilane.

37. Utilisation selon la revendication 36, le polysulfure d'hydroxysilane répondant à la formule générale (I):
(HO)ₐ R₍₃₋ₐ₎ Si―R'―Sₓ―R'―Si R_{(3-b)} (OH)_{b} (I)
dans laquelle :
- les radicaux R, identiques ou différents, sont des groupes hydrocarbonés comportant de préférence de 1 à 15 atomes de carbone;
- les radicaux R', identiques ou différents, sont des groupes de liaison divalents comportant de préférence de 1 à 18 atomes de carbone;
- a et b, identiques ou différents, sont égaux à 1 ou 2,;
- x est supérieur ou égal à 2.

38. Utilisation selon la revendication 37, l'hydroxysilane étant un mono-hydroxysilane (a=b=1).

39. Procédé pour coupler une charge inorganique et un élastomère diénique, dans une composition élastomérique, **caractérisé en ce qu'**on incorpore à au moins un élastomère diénique, au moins une charge inorganique à titre de charge renforçante et un organosilane polyfonctionnel, porteur d'au moins deux fonctions notées "X" et "Y", greffable d'une part sur l'élastomère au moyen de la fonction X et d'autre part sur la charge inorganique au moyen de la fonction Y, ladite fonction Y étant une fonction hydroxysilyle (≡Si-OH), et **en ce qu'**on malaxe thermomécaniquement le tout, en une ou plusieurs étapes, jusqu'à atteindre une température maximale comprise entre 110°C et 190°C.

40. Procédé selon la revendication 39, l'organosilane étant un hydroxysilane soufré, de préférence un polysulfure d'hydroxysilane.

41. Procédé selon la revendication 40, le polysulfure d'hydroxysilane répondant à la formule générale (I):
(HO)ₐ R₍₃₋ₐ₎ Si―R'―Sₓ―R'―Si R_{(3-b)} (OH)_{b}
dans laquelle :
- les radicaux R, identiques ou différents, sont des groupes hydrocarbonés comportant de préférence de 1. à 15 atomes de carbone;
- les radicaux R', identiques ou différents, sont des groupes divalents comportant de préférence de 1 à 18 atomes de carbone;
- a et b, identiques ou différents, sont égaux à 1 ou 2;
- x est supérieur ou égal à 2.

42. Procédé selon la revendication 41, l'hydroxysilane étant un mono-hydroxysilane (a=b=1).

## Claims

1. An elastomer composition based on at least a diene elastomer, an inorganic filler as reinforcing filler, a polyfunctional organosilane as (inorganic filler/diene elastomer) coupling agent bearing at least two functions denoted "X" and "Y" which are graftable, on the one hand, to the elastomer by means of the X function and, on the other, to the inorganic filler by means of the Y function, **characterised in that** said Y function is a hydroxysilyl function (≡Si-OH).

2. A composition according to Claim 1, the diene elastomer being selected from among the group consisting of polybutadienes, natural rubber, synthetic polyisoprenes, butadiene copolymers, isoprene copolymers and mixtures of these elastomers.

3. A composition according to Claim 2, the butadiene copolymers and isoprene copolymers being selected from among butadiene-styrene copolymers, butadiene-isoprene copolymers, isoprene-styrene copolymers, butadiene-acrylonitrile copolymers, butadiene-styrene-isoprene copolymers and mixtures of these copolymers.

4. A composition according to any one of Claims 1 to 3, comprising between 10 and 200 phr (parts by weight per hundred of elastomer) of reinforcing inorganic filler.

5. A composition according to any one of Claims 1 to 4, the quantity of hydroxysilane being between 1 and 20 phr.

6. A composition according to any one of Claims 1 to 5, the hydroxysilane bearing a sulphurised group as the X function, preferably being a hydroxysilane polysulphide.

7. A composition according to Claim 6, the hydroxysilane polysulphide being of the general formula:
(HO)ₐ R₍₃₋ₐ₎ Si―R'―Sₓ―R'―Si R_{(3-b)} (OH)_{b} **(I)**
in which:
- the radicals R, which may be identical or different, are hydrocarbon groups preferably comprising from 1 to 15 carbon atoms;
- the radicals R', which may be identical or different, are divalent linking groups preferably comprising from 1 to 18 carbon atoms;
- a and b, which may be identical or different, are equal to 1 or 2;
- x is greater than or equal to 2.

8. A composition according to any one of Claims 1 to 7, the hydroxysilane being a monohydroxysilane (a = b = 1).

9. A composition according to Claims 7 or 8, in which the radicals R are selected from among C₁-C₆ alkyls, C₅-C₈ cycloalkyls and the phenyl radical; the radicals R' are selected from among C₁-C₁₈ alkylenes and C₆-C₁₂ arylenes.

10. A composition according to Claim 9, the radicals R being selected from among C₁-C₆ alkyls and the radicals R' from among C₁-C₁₀ alkylenes.

11. A composition according to Claim 10, the hydroxysilane being a monohydroxysilane polysulphide of the formula (II): 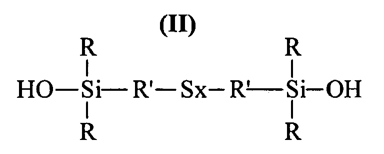 in which the radicals R are C₁-C₃ alkyls, preferably methyl; the radicals R' are C₁-C₄ alkylenes, preferably methylene, ethylene or propylene; x is greater than or equal to 2.

12. A composition according to Claim 11, the hydroxysilane being a bis-(propyldimethylsilanol) polysulphide of the specific formula (II-2):

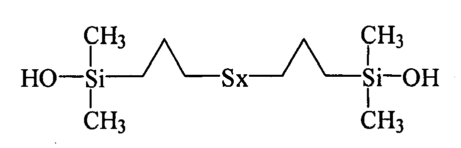

13. A composition according to any one of Claims 1 to 12, the quantity of hydroxysilane representing between 0.5% and 20% by weight relative to the quantity of reinforcing inorganic filler.

14. A composition according to any one of Claims 1 to 13, the majority of the reinforcing inorganic filler being silica.

15. A composition according to any one of Claims 1 to 14, the reinforcing inorganic filler forming the entirety of the reinforcing filler.

16. A composition according to any one of Claims 1 to 14, furthermore comprising carbon black.

17. A composition according to Claim 16, the carbon black being present in an amount between 2 and 20 phr.

18. A composition according to Claim 17, the carbon black being present in an amount lying within a range from 5 to 15 phr.

19. A composition according to any one of Claims 2 to 18, the diene elastomer being a butadiene-styrene copolymer (SBR) having a styrene content of between 20% and 30% by weight, a content of vinyl bonds of the butadiene moiety of between 15% and 65%, a content of trans-1,4 bonds of between 20% and 75% and a glass transition temperature of between -20°C and -55°C.

20. A composition according to Claim 19, the SBR being an SBR prepared in solution (SSBR).

21. A composition according to Claims 19 or 20, the SBR being used in a mixture with a polybutadiene.

22. A composition according to Claim 21, the polybutadiene having more than 90% cis-1,4 bonds.

23. A composition according to any one of Claims 2 to 18, the diene elastomer being an isoprene elastomer, preferably synthetic polyisoprene or natural rubber.

24. A composition according to any one of Claims 1 to 23, **characterised in that** it is in the vulcanised state.

25. A process for preparing an elastomer composition having improved vulcanisation kinetics, **characterised in that** there are incorporated into at least a diene elastomer at least an inorganic filler as reinforcing filler and a polyfunctional organosilane bearing at least two functions denoted "X" and "Y" as coupling agent, which functions are graftable, on the one hand, to the elastomer by means of the X function and, on the other, to the inorganic filler by means of the Y function, said Y function being a hydroxysilyl function (=Si-OH), and **in that** the entire mixture is kneaded thermomechanically in one or more stages until a maximum temperature of between 110°C and 190°C is reached.

26. A process according to Claim 25, the organosilane being a sulphurised hydroxysilane, preferably a hydroxysilane polysulphide.

27. A process according to Claim 26, the hydroxysilane polysulphide being of the general formula (I):
(HO)ₐ R₍₃₋ₐ₎ Si―R'―Sₓ―R'―Si R_{(3-b)} (OH)_{b} (I)
in which:
- the radicals R, which may be identical or different, are hydrocarbon groups preferably comprising from 1 to 15 carbon atoms;
- the radicals R', which may be identical or different, are divalent linking groups preferably comprising from 1 to 18 carbon atoms;
- a and b, which may be identical or different, are equal to 1 or 2;
- x is greater than or equal to 2.

28. A process according to Claim 27, the hydroxysilane being a monohydroxysilane (a = b = 1).

29. Use of a rubber composition according to any one of Claims 1 to 24 for the manufacture of tyres or semi-finished products intended for tyres, these semi-finished products being selected in particular from the group comprising treads, underlayers, crown plies, sidewalls, carcass plies, beads, protectors, inner tubes and airtight internal rubbers for tubeless tyres.

30. A tyre comprising a rubber composition according to any one of Claims 1 to 24.

31. A semi-finished product for tyres, comprising a rubber composition according to any one of Claims 1 to 24, this product being selected in particular from among the group comprising treads, underlayers for these treads, crown plies, sidewalls, carcass plies, beads, protectors, inner tubes and airtight internal rubbers for tubeless tyres.

32. A semi-finished product according to Claim 31, consisting of a tyre tread.

33. A tyre tread according to Claim 32, **characterised in that** it comprises a rubber composition according to any one of Claims 19 to 23.

34. A tyre comprising a tread according to Claim 33.

35. Use as (inorganic filler/diene elastomer) coupling agent in a diene elastomer-based composition reinforced with an inorganic filler of a polyfunctional organosilane bearing at least two functions denoted "X" and "Y" which are graftable, on the one hand, to the elastomer by means of the X function and, on the other, to the inorganic filler by means of the Y function, **characterised in that** said Y function is a hydroxysilyl function (≡SiOH).

36. Use according to Claim 35, the organosilane being a sulphurised hydroxysilane, preferably a hydroxysilane polysulphide.

37. Use according to Claim 36, the hydroxysilane polysulphide being of the general formula (I):
(HO)ₐ R₍₃₋ₐ₎ Si―R'-Sₓ―R'―Si R_{(3-b)} (OH)_{b} (I)
in which:
- the radicals R, which may be identical or different, are hydrocarbon groups preferably comprising from 1 to 15 carbon atoms;
- the radicals R', which may be identical or different, are divalent linking groups preferably comprising from 1 to 18 carbon atoms;
- a and b, which may be identical or different, are equal to 1 or 2;
- x is greater than or equal to 2.

38. Use according to Claim 37, the hydroxysilane being a monohydroxysilane (a = b = 1).

39. A process for coupling an inorganic filler and a diene elastomer, in a rubber composition, **characterised in that** there are incorporated into at least one diene elastomer at least one inorganic filler as reinforcing filler and a polyfunctional organosilane bearing at least two functions denoted "X" and "Y" which are graftable, on the one hand, to the elastomer by means of the X function and, on the other, to the inorganic filler by means of the Y function, said Y function being a hydroxysilyl function (=Si-OH), and **in that** the entire mixture is kneaded thermomechanically in one or more stages until a maximum temperature of between 110°C and 190°C is reached.

40. A process according to claim 39, the organosilane being a sulphurised hydroxysilane, preferably a hydroxysilane polysulphide.

41. A process according to Claim 40, the hydroxysilane polysulphide being of the general formula (I):
(HO)ₐ R₍₃₋ₐ₎ Si―R'―Sₓ―R'―Si R_{(3-b)} (OH)_{b}
in which:
- the radicals R, which may be identical or different, are hydrocarbon groups preferably comprising from 1 to 15 carbon atoms;
- the radicals R', which may be identical or different, are divalent groups preferably comprising from 1 to 18 carbon atoms;
- a and b, which may be identical or different, are equal to 1 or 2;
- x is greater than or equal to 2.

42. A process according to claim 41, the hydroxysilane being a monohydroxysilane (a=b= 1).

## Patentansprüche

1. Elastomermischung auf der Basis mindestens eines Dienelastomers, eines anorganischen Füllstoffs als verstärkenden Füllstoff und eines polyfunktionellen Organosilans als Kupplungsmittel (anorganischer Füllstoff/Dienelastomer), das mindestens zwei als "X" und "Y" bezeichnete Funktionen aufweist und einerseits über die Funktion X auf das Elastomer und andererseits über die Funktion Y auf den anorganischen Füllstoff gepfropft werden kann, **dadurch gekennzeichnet, dass** die Funktion Y eine Hydroxysilylfunktion (=Si-OH) ist.

2. Mischung nach Anspruch 1, wobei das Dienelastomer unter den Polybutadienen, Naturkautschuk, synthetischen Polyisoprenen, Copolymeren von Butadien, Copolymeren von Isopren und Gemischen dieser Elastomere ausgewählt ist.

3. Mischung nach Anspruch 2, wobei die Copolymere von Butadien und die Copolymere von Isopren unter den Butadien-Styrol-Copolymeren, Butadien-Isopren-Copolymeren, Isopren-Styrol-Copolymeren, Butadien-Acrylnitril-Copolymeren, Butadien-Styrol-Isopren-Copolymeren und Gemischen dieser Copolymeren ausgewählt sind.

4. Mischung nach einem der Ansprüche 1 bis 3, die 10 bis 200 pce (Gewichtsteile auf einhundert Teile Elastomer) eines anorganischen verstärkenden Füllstoffs enthält.

5. Mischung nach einem der Ansprüche 1 bis 4, wobei der Mengenanteil des Hydroxysilans im Bereich von 1 bis 20 pce liegt.

6. Mischung nach einem der Ansprüche 1 bis 5, wobei das Hydroxysilan eine schwefelhaltige Gruppe als Funktion X aufweist und vorzugsweise ein Hydroxysilanpolysulfid ist.

7. Mischung nach Anspruch 6, wobei das Hydroxysilanpolysulfid der folgenden allgemeinen Formel entspricht:
(HO)ₐR₍₃₋ₐ₎Si―R'―Sₓ―R'―SiR_{(3-b)}(OH)_{b} (I)
worin bedeuten:
- die Gruppen R, die gleich oder verschieden sind, sind Kohlenwasserstoffgruppen, die vorzugsweise 1 bis 15 Kohlenstoffatome aufweisen;
- die Gruppen R', die gleich oder verschieden sind, sind zweiwertige Verbindungsgruppen, die vorzugsweise 1 bis 18 Kohlenstoffatome besitzen;
- a und b, die gleich oder verschieden sind, bedeuten 1 oder 2;
- x ist größer oder gleich 2.

8. Mischung nach einem der Ansprüche 1 bis 7, wobei das Hydroxysilan ein Monohydroxysilan ist (a=b=1).

9. Mischung nach den Anprüchen 7 oder 8, wobei die Gruppen R unter den C₁₋₆-Alkylgruppen, C₅₋₈-Cycloalkylgruppen und Phenyl ausgewählt sind; und die Gruppen R' unter den C₁₋₁₈₋Alkylengruppen und den C₆₋₁₂-Arylengruppen ausgewählt sind.

10. Mischung nach Anspruch 9, wobei die Gruppen R unter den C₁₋₆-Alkylgruppen und die Gruppen R' unter den C₁₋₁₀-Alkylengruppen ausgewählt sind.

11. Mischung nach Anspruch 10, wobei das Hydroxysilan ein Monohydroxysilanpolysulfid der Formel (II) ist: 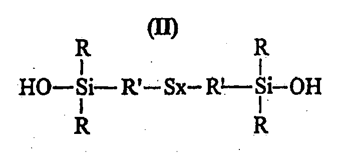 worin die Gruppen R C₁₋₃-Alkylgruppen sind und vorzugsweise Methyl bedeuten; die Gruppen R' C₁₋₄-Alkylengruppen sind und vorzugsweise Methylen, Ethylen oder Propylen bedeuten; und x mindestens 2 ist.

12. Mischung nach Anspruch 11, wobei das Hydroxysilan ein Bis-(propyldimethylsilanol)polysulfid der speziellen Formel (II-2) ist:

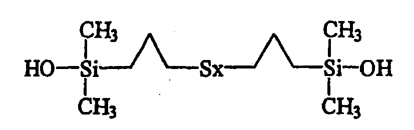

13. Mischung nach einem der Ansprüche 1 bis 12, wobei der Mengenanteil des Hydroxysilans im Bereich von 0,5 bis 20 Gew.-%, bezogen auf den Mengenanteil des verstärkenden anorganischen Füllstoffs, liegt.

14. Mischung nach einem der Ansprüche 1 bis 13, wobei der anorganische verstärkende Füllstoff in einem überwiegenden Anteil aus Kieselsäure besteht.

15. Mischung nach einem der Ansprüche 1 bis 14, wobei der anorganische verstärkende Füllstoff den gesamten verstärkenden Füllstoff bildet.

16. Mischung nach einem der Ansprüche 1 bis 14, die ferner Ruß enthält.

17. Mischung nach Anspruch 16, wobei der Ruß in einer Menge von 2 bis 20 pce enthalten ist.

18. Mischung nach Anspruch 17, wobei der Ruß in einer Menge von 5 bis 15 pce enthalten ist.

19. Mischung nach einem der Ansprüche 2 bis 18, wobei das Dienelastomer ein Butadien-Styrol-Copolymer (SBR) mit einem Styrolgehalt von 20 bis 30 Gew.-%, einem Gehalt an Vinylbindungen des Butadienteils von 15 bis 65 %, einem Gehalt an trans-1,4-Bindungen von 20 bis 75 % und einer Glasübergangstemperatur von -20 bis -55 °C ist.

20. Mischung nach Anspruch 19, wobei der SBR ein in Lösung hergestellter SBR (SSBR) ist.

21. Mischung nach den Ansprüchen 19 oder 20, wobei der SBR im Gemisch mit Polybutadien verwendet wird.

22. Mischung nach Anspruch 21, wobei das Polybutadien mehr als 90 % cis-1,4-Bindungen aufweist.

23. Mischung nach einem der Ansprüche 2 bis 18, wobei das Dienelastomer ein Isoprenelastomer ist, vorzugsweise ein synthetisches Polyisopren oder Naturkautschuk.

24. Mischung nach einem der Ansprüche 1 bis 23, **dadurch gekennzeichnet, dass** sie im vulkanisierten Zustand vorliegt.

25. Verfahren zur Herstellung einer Elastomermischung mit verbesserter Vulkanisationskinetik, **dadurch gekennzeichnet, dass** in ein Dienelastomer mindestens ein anorganischer Füllstoff als verstärkender Füllstoff und ein polyfunktionelles Organosilan als Kupplungsmittel (anorganischer Füllstoff/Dienelastomer) eingebracht wird, das mindestens zwei als "X" und "Y" bezeichnete Funktionen aufweist und einerseits über die Funktion X auf das Elastomer und andererseits über die Funktion Y auf den anorganischen Füllstoff gepfropft werden kann, wobei die Funktion Y eine Hydroxysilylfunktion (≡Si-OH) ist, und **dadurch**, dass das Ganze in einem oder mehreren Schritten bis zum Erreichen einer Maximaltemperatur von 110 bis 190 °C thermomechanisch geknetet wird.

26. Verfahren nach Anspruch 25, wobei das Organosilan ein schwefelhaltiges Hydroxysilan und vorzugsweise ein Hydroxysilanpolysulfid ist.

27. Verfahren nach Anspruch 26, wobei das Hydroxysilanpolysulfid der allgemeinen Formel (I) entspricht:
(HO)aR₍₃₋ₐ₎Si―R'―Sₓ―R'―SiR_{(3-b)}(OH)_{b} (I)
worin bedeuten:
- die Gruppen R, die gleich oder verschieden sind, sind Kohlenwasserstoffgruppen, die vorzugsweise 1 bis 15 Kohlenstoffatome aufweisen;
- die Gruppen R', die gleich oder verschieden sind, sind zweiwertige Verbindungsgruppen, die vorzugsweise 1 bis 18 Kohlenstoffatome besitzen;
- a und b, die gleich oder verschieden sind, bedeuten 1 oder 2;
- x ist 2 oder größer 2.

28. Verfahren nach Anspruch 27, wobei das Hydroxysilan ein Monohydroxysilan ist (a=b=1).

29. Verwendung einer Kautschukmischung nach einem der Ansprüche 1 bis 24 für die Herstellung von Luftreifen oder Halbfertigprodukten, die für Luftreifen vorgesehen sind, wobei diese Halbfertigprodukte insbesondere unter den Laufstreifen, Unterplatten, Scheitellagen, Flanken, Karkassenlagen, Wülsten, Protektoren, Schläuchen und dichten Innenseelen für schlauchlose Reifen ausgewählt sind.

30. Luftreifen, der eine Kautschukmischung nach einem der Ansprüche 1 bis 24 enthält.

31. Halbfertigprodukt für Luftreifen, das eine Kautschukmischung nach einem der Ansprüche 1 bis 24 enthält, wobei dieses Produkt insbesondere unter den Laufstreifen, Unterplatten für Laufstreifen, Scheitellagen, Flanken, Karkassenlagen, Wülsten, Protektoren, Schläuchen und dichten Innenseelen für schlauchlose Reifen ausgewählt sind.

32. Halbfertigprodukt nach Anspruch 31, bei dem es sich um einen Laufstreifen für Luftreifen handelt.

33. Laufstreifen für Luftreifen nach Anspruch 32, der aus einer Kautschukmischung nach einem der Ansprüche 19 bis 23 gebildet ist.

34. Luftreifen, der einen Laufstreifen nach Anspruch 33 enthält.

35. Verwendung eines polyfunktionellen Organosilans, das mindestens zwei als "X" und "Y" bezeichnete Funktionen aufweist und über die Funktion X einerseits auf das Elastomer und über die Funktion Y andererseits auf den anorganischen Füllstoff gepfropft werden kann, als Kupplungsmittel (anorganischer Füllstoff/Dienelastomer) in einer mit einem anorganischen Füllstoff verstärkten Zusammensetzung auf der Basis eines Dienelastomers, **dadurch gekennzeichnet, dass** die Funktion Y eine Hydroxysilylfunktion (≡Si-OH) ist.

36. Verwendung nach Anspruch 35, wobei das Organosilan ein schwefelhaltiges Hydroxysilan und vorzugsweise ein Hydroxysilanpolysulfid ist.

37. Verwendung nach Anspruch 36, wobei das Hydroxysilanpolysulfid der folgenden allgemeinen Formel (I) entspricht:
(HO)ₐR₍₃₋ₐ₎Si―R'―Sₓ―R'―SiR_{(3-b)}(OH)_{b} (I)
worin bedeuten:
- die Gruppen R, die gleich oder verschieden sind, sind Kohlenwasserstoffgruppen, die vorzugsweise 1 bis 15 Kohlenstoffatome aufweisen;
- die Gruppen R', die gleich oder verschieden sind, sind zweiwertige Verbindungsgruppen, die vorzugsweise 1 bis 18 Kohlenstoffatome besitzen;
- a und b, die gleich oder verschieden sind, bedeuten 1 oder 2;
- x ist größer oder gleich 2.

38. Verwendung nach Anspruch 37, wobei das Hydroxysilan ein Monohydroxysilan ist (a=b=1).

39. Verfahren zur Kupplung eines anorganischen Füllstoffs und eines Dienelastomers in einer Elastomermischung, **dadurch gekennzeichnet, dass** in mindestens ein Dienelastomer mindestens ein anorganischer Füllstoff als verstärkender Füllstoff und ein polyfunktionelles Organosilan eingebracht wird, das mindestens zwei als "X" und "Y" bezeichnete Funktionen trägt und über die Funktion X einerseits auf das Elastomer und über die Funktion Y andererseits auf den anorganischen Füllstoff gepfropft werden kann, wobei die Funktion Y eine Hydroxysilylfunktion (≡Si-OH) ist, und **dadurch**, dass das Ganze in einer oder mehreren Stufen bis zum Erreichen einer Maximaltemperatur von 110 bis 190 °C thermomechanisch geknetet wird.

40. Verfahren nach Anspruch 39, wobei das Organosilan ein schwefelhaltiges Hydroxysilan und vorzugsweise ein Hydroxysilanpolysulfid ist.

41. Verfahren nach Anspruch 40, wobei das Hydroxysilanpolysulfid der folgenden allgemeinen Formel (I) entspricht:
(HO)ₐR₍₃₋ₐ₎Si―R'―Sₓ―R'―SiR_{(3-b)}(OH)_{b},
worin bedeuten:
- die Gruppen R, die gleich oder verschieden sind, sind Kohlenwasserstoffgruppen, die vorzugsweise 1 bis 15 Kohlenstoffatome aufweisen;
- die Gruppen R', die gleich oder verschieden sind, sind zweiwertige Verbindungsgruppen, die vorzugsweise 1 bis 18 Kohlenstoffatome besitzen;
- a und b, die gleich oder verschieden sind, bedeuten 1 oder 2;
- x ist größer oder gleich 2.

42. Verfahren nach Anspruch 41, wobei das Hydroxysilan ein Monohydroxysilan ist (a=b=1).
